Europäisches Patentamt

European Patent Office

Office européen des brevets

(11) Publication number: **0 669 749 A1**

## EUROPEAN PATENT APPLICATION

(21) Application number: **94304742.3**

(22) Date of filing: **29.06.94**

(51) Int. Cl.⁶: **H04M 11/06**, H04L 27/34

(30) Priority: **24.02.94 US 201239**

(43) Date of publication of application:
**30.08.95 Bulletin 95/35**

(84) Designated Contracting States:
**AT BE CH DE DK ES FR GB GR IE IT LI LU MC NL PT SE**

(71) Applicant: **Multi-Tech Systems Inc**
**2205 Woodale Drive**
**Mounds View,**
**Minnesota 55112 (US)**

(72) Inventor: **Maitra, Sidhartha**

**13750 Surrey Lane**
**Saratoga,**
**California 95070 (US)**
Inventor: **Sharma, Raghu**
**16 Evergreen Road**
**North Oaks,**
**Minnesota 55127 (US)**

(74) Representative: **Belcher, Simon James et al**
**Urquhart-Dykes & Lord**
**Tower House**
**Merrion Way**
**Leeds LS2 8PA (GB)**

(54) **Noncompressed voice and data communication over modem for a computer-based multifunction personal communications system.**

(57) The voice over data component of a personal communications system enables the operator to simultaneously transmit voice and data communication to a remote site. This voice over data function directly encodes digitized voice samples onto the carrier using quadrature amplitude modulation to transmit multiple bits of the voice sample for every baud. The system also allocates selected bauds of the carrier to voice and to data so the voice over data may be transmitted using the same allocated bandwidth. The system may also dynamically reallocate the bandwidth over the telephone line depending on the demands of the voice grade digitized signal.

FIG. 3

Field of the Invention

The present invention relates to communications systems and in particular to a computer assisted personal communications system (PCS) having simultaneous data and digitized voice communications ability.

Background of the Invention

A wide variety of communications alternatives are currently available to telecommunications users. For example, facsimile transmission of printed matter is available through what is commonly referred to as a stand-alone fax machine. Alternatively, fax-modem communication systems are currently available for personal computer users which combine the operation of a facsimile machine with the word processor of a computer to transmit documents held on computer disk. Modem communication over telephone lines in combination with a personal computer is also known in the art where file transfers can be accomplished from one computer to another. Also, simultaneous voice and modem data transmitted over the same telephone line has been accomplished in several ways.

There is a need in the art, however, for a personal communications system which combines a wide variety of communication functions into an integrated hardware-software product such that the user can conveniently choose a mode of communication and have that communication automatically invoked from a menu driven selection system.

There is a further need in the art for a personal communications system which provide a data communications mode and which allows for simultaneous transmission and reception of data and digitized high-fidelity voice in a voice-over-data operational mode where a minimum bandwidth is required for the transmission and a minimal processing of the voice is required.

Summary of the Invention

The present disclosure describes a complex computer assisted communications system. The subject of the present invention is a personal communications system which includes components of software and hardware operating in conjunction with a personal computer. The user interface control software operates on a personal computer, preferably within the Microsoft Windows® environment. The software control system communicates with hardware components linked to the software through the personal computer serial communications port. The hardware components include telephone communication equipment, digital signal processors, and hardware to enable both fax and data communication with a hardware components at a remote site connected through a standard telephone line. The functions of the hardware components are controlled by control software operating within the hardware component and from the software components operating within the personal computer.

Communications between the software components running on the personal computer and the local hardware components over the serial communications link is by a special packet protocol for digital data communications. This bi-directional communications protocol allows uninterrupted bidirectional full-duplex transfer of both control information and data communication.

The major functions of the present system are a telephone function, a voice mail function, a fax manager function, a multi-media mail function, a show and tell function, a terminal function and an address book function. The telephone function allows the present system to operate, from the users perspective, as a conventional telephone using either hands-free, headset or handset operation. The telephone function is more sophisticated than a standard telephone in that the present system converts the voice into a digital signal which can be processed with echo cancellation, compressed, stored as digital data for later retrieval and transmitted as digital voice data concurrent with the transfer of digital information data.

The voice over data (show and tell) component of the present system enables the operator to simultaneously transmit voice and data communication to a remote site. This voice over data function dynamically allocates data bandwidth over the telephone line depending on the demands of the voice grade digitized signal. With the present invention, the digitized voice may be transmitted in a compressed packet format or an noncompressed format. The present invention describes the noncompressed method of directly encoding the digitized voice onto a V.32 protocol and multiplexing the digitized voice with the data. for multiplexed transmission.

These features of the hardware component of the present system along with the features of the software component of the present system running on a PC provides a user with a complete range of telecommunications functions of a modern office, be it a stationary or mobile.

Description of the Drawings

In the drawings, where like numerals describe like components throughout the several views,

Figure 1 shows the telecommunications environment within which the present may operate in several of the possible modes of communication;

Figure 2 is the main menu icon for the software components operating on the personal computer;

Figure 3 is a block diagram of the hardware components of the present system;

Figure 4 is a key for viewing the detailed electrical schematic diagrams of Figures 5A-10C to facilitate understanding of the interconnect between the drawings;

Figures 5A-5C, 6A-6C, 7A-7C, 8A-8B, 9A-9C and 10A-10C are detailed electrical schematic diagrams of the circuitry of the hardware components of the present system;

Figure 11 is a signal flow diagram of the speech compression algorithm;

Figure 12 is a detailed function flow diagram of the speech compression algorithm;

Figure 13 is a detailed function flow diagram of the speech decompression algorithm;

Figure 14 is a detailed function flow diagram of the echo cancellation algorithm;

Figure 15 is a detailed function flow diagram of the voice/data multiplexing function;

Figure 16 is a perspective view of the components of a digital computer compatible with the present invention;

Figure 17 is a block diagram of the software structure compatible with the present invention.

Figure 18 is a Real/Imaginary plane plot of a four point and a sixteen point non-redundant coding for a 9600 bit per second encoding of a 2400 baud carrier in the CCITT V.32 standard of differential quadrant coding for 4800 bits per second and for non-redundant coding at 9600 bits per second using QAM modulation;

Figure 19 represents a time domain sampling plot of a speech signal sampled at twice the highest frequency of the voice band allowed;

Figure 20 represents the complex plane in which two samples $(S_n, S_{n+1})$ are simultaneously transmitted during a single baud; and

Figures 21a-21e represent the companding of the voice signal in the frequency domain prior to transmission.

Detailed Description of the Preferred Embodiments

The specification for the multiple inventions described herein includes the present description and drawings, and the material incorporated by reference from the parent application. In the following detailed description of the preferred embodiment, reference is made to the accompanying drawings which form a part hereof, and in which is shown by way of illustration specific embodiments in which the inventions may be practiced. These embodiments are described in sufficient detail to enable those skilled in the art to practice the invention, and it is to be understood that other embodiments may be utilized and that structural changes may be made without departing from the spirit and scope of the present inventions. The following detailed description is, therefore, not to be taken in a limiting sense, and the scope of the present inventions is defined by the appended claims.

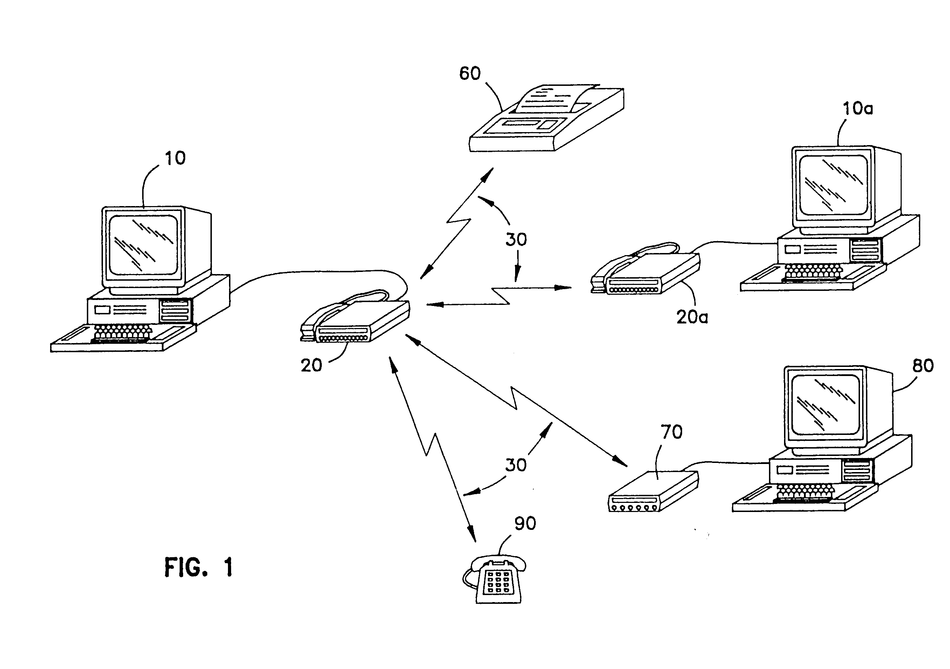

Figure 1 shows a typical arrangement for the use of the present system. Personal computer 10 is running the software components of the present system while the hardware components 20 include the data communication equipment and telephone headset. Hardware components 20 communicate over a standard telephone line 30 to one of a variety of remote sites. One of the remote sites may be equipped with the present system including hardware components 20a and software components running on personal computer 10a. In one alternative use, the local hardware components 20 may be communicating over standard telephone line 30 to facsimile machine 60. In another alternative use, the present system may be communicating over a standard telephone line 30 to another personal computer 80 through a remote modem 70. In another alternative use, the present system may be communicating over a standard telephone line 30 to a standard telephone 90. Those skilled in the art will readily recognize the wide variety of communication interconnections possible with the present system by reading and understanding the following detailed description.

The first portion of the present specification describes the system design which utilizes either the compressed or noncompressed voice transmission technique. The present invention is then described beginning with the section entitled NONCOMPRESSED VOICE AND DATA COMMUNICATION.

3

General Overview

The present inventions are embodied in a commercial product by the assignee, MultiTech Systems, Inc. The software component operating on a personal computer is sold under the commercial trademark of MultiExpressPCS™ personal communications software while the hardware component of the present system is sold under the commercial name of MultiModemPCS™, Intelligent Personal Communications System Modem. In the preferred embodiment, the software component runs under Microsoft® Windows® however those skilled in the art will readily recognize that the present system is easily adaptable to run under any single or multi-user, single or multi-window operating system. The entire system is generally referred to as the PCS system and the hardware component is generally referred to as a PCS modem.

The present system is a multifunction communication system which includes hardware and software components. The system allows the user to connect to remote locations equipped with a similar system or with modems, facsimile machines or standard telephones over a single analog telephone line. The software component of the present system includes a number of modules which are described in more detail below.

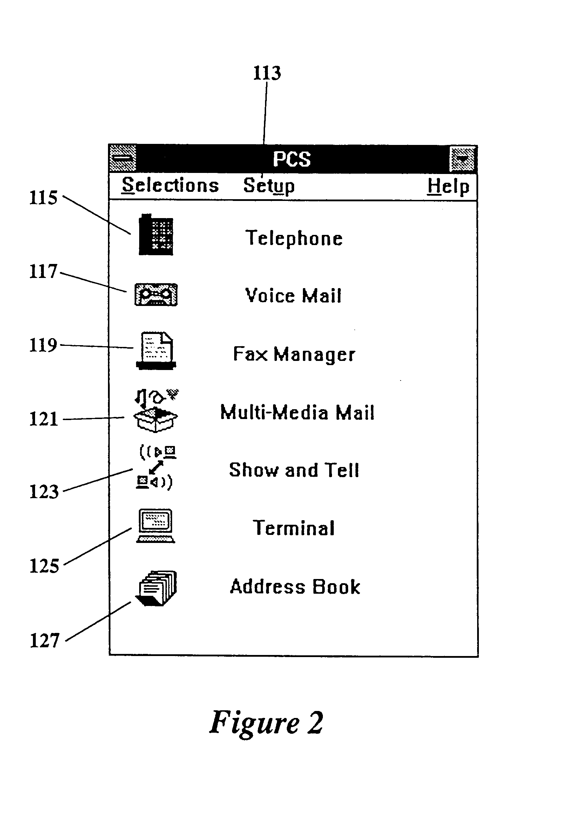

Figure 2 is an example of the Windows®-based main menu icon of the present system operating on a personal computer. The functions listed with the icons used to invoke those functions are shown in the preferred embodiment. Those skilled in the art will readily recognize that a wide variety of selection techniques may be used to invoke the various functions of the present system. The icon of Figure 2 is part of Design Patent Application Number 29/001397, filed November 12, 1992 entitled "Icons for a Computer-Based Multifunction Personal Communications System" assigned to the same assignee of the present invention and hereby incorporated by reference.

The telephone module allows the system to operate as a conventional or sophisticated telephone system. The system converts voice into a digital signal so that it can be transmitted or stored with other digital data, like computer information. The telephone function supports PBX and Centrex features such a call waiting, call forwarding, caller ID and three-way calling. This module also allows the user to mute, hold or record a conversation. The telephone module enables the handset, headset or hands-free speaker telephone operation of the hardware component. It includes on-screen push button dialing, speed-dial of stored numbers and digital recording of two-way conversations.

The voice mail portion of the present system allows this system to operate as a telephone answering machine by storing voice messages as digitized voice files along with a time/date voice stamp. The digitized voice files can be saved and sent to one or more destinations immediately or at a later time using a queue scheduler. The user can also listen to, forward or edit the voice messages which have been received with a powerful digital voice editing component of the present system. This module also creates queues for outgoing messages to be sent at preselected times and allows the users to create outgoing messages with the voice editor.

The fax manager portion of the present system is a queue for incoming and outgoing facsimile pages. In the preferred embodiment of the present system, this function is tied into the Windows "print" command once the present system has been installed. This feature allows the user to create faxes from any Windows®-based document that uses the "print" command. The fax manager function of the present system allows the user to view queued faxes which are to be sent or which have been received. This module creates queues for outgoing faxes to be sent at preselected times and logs incoming faxes with time/date stamps.

The multi-media mail function of the present system is a utility which allows the user to compose documents that include text, graphics and voice messages using the message composer function of the present system, described more fully below. The multi-media mail utility of the present system allows the user to schedule messages for transmittal and queues up the messages that have been received so that can be viewed at a later time.

The show and tell function of the present system allows the user to establish a data over voice (DOV) communications session. When the user is transmitting data to a remote location similarly equipped, the user is able to talk to the person over the telephone line while concurrently transferring the data. This voice over data function is accomplished in the hardware components of the present system. It digitizes the voice and transmits it in a dynamically changing allocation of voice data and digital data multiplexed in the same transmission. The allocation at a given moment is selected depending on the amount of voice digital information required to be transferred. Quiet voice intervals allocate greater space to the digital data transmission.

The terminal function of the present system allows the user to establish a data communications session with another computer which is equipped with a modem but which is not equipped with the present system. This feature of the present system is a Windows®-based data communications program that reduces the need for issuing "AT" commands by providing menu driven and "pop-up" window alternatives.

The address book function of the present system is a database that is accessible from all the other functions of the present system. This database is created by the user inputting destination addresses and telephone numbers for data communication, voice mail, facsimile transmission, modem communication and the like. The address book function of the present system may be utilized to broadcast communications to a wide variety of recipients. Multiple linked databases have separate address books for different groups and different destinations may be created by the users. The address book function includes a textual search capability which allows fast and efficient location of specific addresses as described more fully below.

Hardware Components

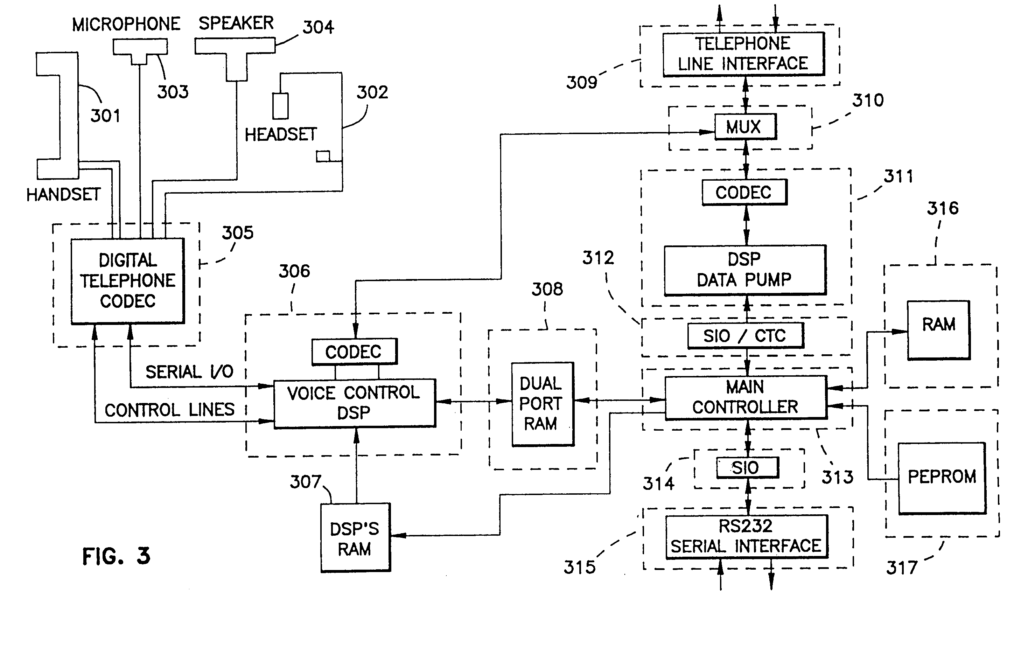

Figure 3 is a block diagram of the hardware components of the present system corresponding to reference number 20 of Figure 1. These components form the link between the user, the personal computer running the software component of the present system and the telephone line interface. As will be more fully described below, the interface to the hardware components of the present system is via a serial communications port connected to the personal computer. The interface protocol is well ordered and defined such that other software systems or programs running on the personal computer may be designed and implemented which would be capable of controlling the hardware components shown in Figure 3 by using the control and communications protocol defined below.

In the preferred embodiment of the present system three alternate telephone interfaces are available: the telephone handset 301, a telephone headset 302, and a hands-free microphone 303 and speaker 304. Regardless of the telephone interface, the three alternative interfaces connect to the digital telephone coder-decoder (CODEC) circuit 305.

The digital telephone CODEC circuit 305 interfaces with the voice control digital signal processor (DSP) circuit 306 which includes a voice control DSP and CODEC. This circuit does digital to analog (D/A) conversion, analog to digital (A/D) conversion, coding/decoding, gain control and is the interface between the voice control DSP circuit 306 and the telephone interface. The CODEC of the voice control circuit 306 transfers digitized voice information in a compressed format to multiplexor circuit 310 to analog telephone line interface 309.

The CODEC of the voice control circuit 306 is actually an integral component of a voice control digital signal processor integrated circuit, as described more fully below. The voice control DSP of circuit 306 controls the digital telephone CODEC circuit 305, performs voice compression and echo cancellation.

Multiplexor (MUX) circuit 310 selects between the voice control DSP circuit 306 and the data pump DSP circuit 311 for transmission of information on the telephone line through telephone line interface circuit 309.

The data pump circuit 311 also includes a digital signal processor (DSP) and a CODEC for communicating over the telephone line interface 309 through MUX circuit 310. The data pump DSP and CODEC of circuit 311 performs functions such as modulation, demodulation and echo cancellation to communicate over the telephone line interface 309 using a plurality of telecommunications standards including FAX and modem protocols.

The main controller circuit 313 controls the DSP data pump circuit 311 and the voice control DSP circuit 306 through serial input/output and clock timer control (SIO/CTC) circuits 312 and dual port RAM circuit 308 respectively. The main controller circuit 313 communicates with the voice control DSP 306 through dual port RAM circuit 308. In this fashion digital voice data can be read and written simultaneously to the memory portions of circuit 308 for high speed communication between the user (through interfaces 301, 302 or 303/304) and the personal computer connected to serial interface circuit 315 and the remote telephone connection connected through the telephone line attached to line interface circuit 309.

As described more fully below, the main controller circuit 313 includes, in the preferred embodiment, a microprocessor which controls the functions and operation of all of the hardware components shown in Figure 3. The main controller is connected to RAM circuit 316 and an programmable and electrically erasable read only memory (PEROM) circuit 317. The PEROM circuit 317 includes non-volatile memory in which the executable control programs for the voice control DSP circuits 306 and the main controller circuits 313 operate.

The RS232 serial interface circuit 315 communicates to the serial port of the personal computer which is running the software components of the present system. The RS232 serial interface circuit 315 is connected to a serial input/output circuit 314 with main controller circuit 313. SIO circuit 314 is in the preferred embodiment, a part of SIO/CTC circuit 312.

Functional Operation of the Hardware Components

Referring once again to Figure 3, the multiple and selectable functions described in conjunction with Figure 2 are all implemented in the hardware components of Figure 3. Each of these functions will be discussed in turn.

The telephone function 115 is implemented by the user either selecting a telephone number to be dialed from the address book 127 or manually selecting the number through the telephone menu on the personal computer. The telephone number to be dialed is downloaded from the personal computer over the serial interface and received by main controller 313. Main controller 313 causes the data pump DSP circuit 311 to seize the telephone line and transmit the DTMF tones to dial a number. Main controller 313 configures digital telephone CODEC circuit 305 to enable either the handset 301 operation, the microphone 303 and speaker 304 operation or the headset 302 operation. A telephone connection is established through the telephone line interface circuit 309 and communication is enabled. The user's analog voice is transmitted in an analog fashion to the digital telephone CODEC 305 where it is digitized. The digitized voice patterns are passed to the voice control circuit 306 where echo cancellation is accomplished, the digital voice signals are reconstructed into analog signals and passed through multiplexor circuit 310 to the telephone line interface circuit 309 for analog transmission over the telephone line. The incoming analog voice from the telephone connection through telephone connection circuit 309 is passed to the integral CODEC of the voice control circuit 306 where it is digitized. The digitized incoming voice is then passed to digital telephone CODEC circuit 305 where it is reconverted to an analog signal for transmission to the selected telephone interface (either the handset 301, the microphone/speaker 303/304 or the headset 302). Voice Control DSP circuit 306 is programmed to perform echo cancellation to avoid feedback and echoes between transmitted and received signals, as is more fully described below.

In the voice mail function mode of the present system, voice messages may be stored for later transmission or the present system may operate as an answering machine receiving incoming messages. For storing digitized voice, the telephone interface is used to send the analog speech patterns to the digital telephone CODEC circuit 305. Circuit 305 digitizes the voice patterns and passes them to voice control circuit 306 where the digitized voice patterns are digitally compressed. The digitized and compressed voice patterns are passed through dual port ram circuit 308 to the main controller circuit 313 where they are transferred through the serial interface to the personal computer using a packet protocol defined below. The voice patterns are then stored on the disk of the personal computer for later use in multi-media mail, for voice mail, as a pre-recorded answering machine message or for later predetermined transmission to other sites.

For the present system to operate as an answering machine, the hardware components of Figure 3 are placed in answer mode. An incoming telephone ring is detected through the telephone line interface circuit 309 and the main controller circuit 313 is alerted which passes the information off to the personal computer through the RS232 serial interface circuit 315. The telephone line interface circuit 309 seizes the telephone line to make the telephone connection. A pre-recorded message may be sent by the personal computer as compressed and digitized speech through the RS232 interface to the main controller circuit 313. The compressed and digitized speech from the personal computer is passed from main controller circuit 313 through dual port ram circuit 308 to the voice control DSP circuit 306 where it is uncompressed and converted to analog voice patterns. These analog voice patterns are passed through multiplexor circuit 310 to the telephone line interface 309 for transmission to the caller. Such a message may invite the caller to leave a voice message at the sound of a tone. The incoming voice messages are received through telephone line interface 309 and passed to voice control circuit 306. The analog voice patterns are digitized by the integral CODEC of voice control circuit 306 and the digitized voice patterns are compressed by the voice control DSP of the voice control circuit 306. The digitized and compressed speech patterns are passed through dual port ram circuit 308 to the main controller circuit 313 where they are transferred using packet protocol described below through the RS232 serial interface 315 to the personal computer for storage and later retrieval. In this fashion the hardware components of Figure 3 operate as a transmit and receive voice mail system for implementing the voice mail function 117 of the present system.

The hardware components of Figure 3 may also operate to facilitate the fax manager function 119 of Figure 2. In fax receive mode, an incoming telephone call will be detected by a ring detect circuit of the telephone line interface 309 which will alert the main controller circuit 313 to the incoming call. Main controller circuit 313 will cause line interface circuit 309 to seize the telephone line to receive the call. Main controller circuit 313 will also concurrently alert the operating programs on the personal computer through the RS232 interface using the packet protocol described below. Once the telephone line interface seizes the telephone line, a fax carrier tone is transmitted and a return tone and handshake is received from the telephone line and detected by the data pump circuit 311. The reciprocal transmit and receipt of the fax tones indicates the imminent receipt of a facsimile transmission and the main controller circuit 313 configures the hardware components of Figure 3 for the receipt of that information. The necessary handshaking with the remote facsimile machine is accomplished through the data pump 311 under control of the main controller circuit 313. The incoming data packets of digital facsimile data are received over the telephone line interface and passed through data pump circuit 311 to main controller circuit 313 which forwards the information on a packet basis (using the packet protocol described more fully below) through the serial interface circuit 315 to the personal computer for storage on disk. Those skilled in the art will readily recognize that the FAX data could be transferred from the telephone line to the personal computer using the same path as the packet transfer except using the normal AT stream mode. Thus the incoming facsimile is automatically received and stored on the personal computer through the hardware components of Figure 3.

A facsimile transmission is also facilitated by the hardware components of Figure 3. The transmission of a facsimile may be immediate or queued for later transmission at a predetermined or preselected time. Control packet information to configure the hardware components to send a facsimile are sent over the RS232 serial interface between the personal computer and the hardware components of Figure 3 and are received by main controller circuit 313. The data pump circuit 311 then dials the recipient's telephone number using DTMF tones or pulse dialing over the telephone line interface circuit 309. Once an appropriate connection is established with the remote facsimile machine, standard facsimile handshaking is accomplished by the data pump circuit 311. Once the facsimile connection is established, the digital facsimile picture information is received through the data packet protocol transfer over serial line interface circuit 315, passed through main controller circuit 313 and data pump circuit 311 onto the telephone line through telephone line interface circuit 309 for receipt by the remote facsimile machine.

The operation of the multi-media mail function 121 of Figure 2 is also facilitated by the hardware components of Figure 3. A multimedia transmission consists of a combination of picture information, digital data and digitized voice information. For example, the type of multimedia information transferred to a remote site using the hardware components of Figure 3 could be the multimedia format of the MicroSoft® Multimedia Wave® format with the aid of an Intelligent Serial Interface (ISI) card added to the personal computer. The multimedia may also be the type of multimedia information assembled by the software component of the present system which is described more fully below.

The multimedia package of information including text, graphics and voice messages (collectively called the multimedia document) may be transmitted or received through the hardware components shown in Figure 3. For example, the transmission of a multimedia document through the hardware components of Figure 3 is accomplished by transferring the multimedia digital information using the packet protocol described below over the RS232 serial interface between the personal computer and the serial line interface circuit 315. The packets are then transferred through main controller circuit 313 through the data pump circuit 311 on to the telephone line for receipt at a remote site through telephone line interface circuit 309. In a similar fashion, the multimedia documents received over the telephone line from the remote site are received at the telephone line interface circuit 309, passed through the data pump circuit 311 for receipt and forwarding by the main controller circuit 313 over the serial line interface circuit 315.

The show and tell function 123 of the present system allows the user to establish a data over voice communication session. In this mode of operation, full duplex data transmission may be accomplished simultaneously with the voice communication between both sites. This mode of operation assumes a like configured remote site. The hardware components of the present system also include a means for sending voice/data over cellular links. The protocol used for transmitting multiplexed voice and data include a supervisory packet described more fully below to keep the link established through the cellular link. This supervisory packet is an acknowledgement that the link is still up. The supervisory packet may also contain link information to be used for adjusting various link parameters when needed. This supervisory packet is sent every second when data is not being sent and if the packet is not acknowledged after a specified number of attempts, the protocol would then give an indication that the cellular link is down and then allow the modem to take action. The action could be for example; change speeds, retrain, or hang up. The use of supervisory packets is a novel method of maintaining inherently intermittent cellular links when transmitting multiplexed voice and data.

The voice portion of the voice over data transmission of the show and tell function is accomplished by receiving the user's voice through the telephone interface 301, 302 or 303 and the voice information is digitized by the digital telephone circuit 305. The digitized voice information is passed to the voice control circuit 306 where the digitized voice information is compressed using a voice compression algorithm described more fully below. The digitized and compressed voice information is passed through dual port RAM circuit 308 to the main controller circuit 313. During quiet periods of the speech, a quiet flag is passed from voice control circuit 306 to the main controller 313 through a packet transfer protocol described below by a dual port RAM circuit 308.

Simultaneous with the digitizing compression and packetizing of the voice information is the receipt of the packetized digital information from the personal computer over interface line circuit 315 by main controller circuit 313. Main controller circuit 313 in the show and tell function of the present system must efficiently and effectively combine the digitized voice information with the digital information for transmission over the telephone line via telephone line interface circuit 309. As described above and as described more fully below, main controller circuit 313 dynamically changes the amount of voice information and digital information transmitted at any given period of time depending upon the quiet times during the voice transmissions. For example, during a quiet moment where there is no speech information being transmitted, main controller circuit 313 ensures that a higher volume of digital data information be transmitted over the telephone line interface in lieu of digitized voice information.

Also, as described more fully below, the packets of digital data transmitted over the telephone line interface with the transmission packet protocol described below, requires 100 percent accuracy in the transmission of the digital data, but a lesser standard of accuracy for the transmission and receipt of the digitized voice information. Since digital information must be transmitted with 100 percent accuracy, a corrupted packet of digital information received at the remote site must be re-transmitted. A retransmission signal is communicated back to the local site and the packet of digital information which was corrupted during transmission is retransmitted. If the packet transmitted contained voice data, however, the remote site uses the packets whether they were corrupted or not as long as the packet header was intact. If the header is corrupted, the packet is discarded. Thus, the voice information may be corrupted without requesting retransmission since it is understood that the voice information must be transmitted on a real time basis and the corruption of any digital information of the voice signal is not critical. In contrast to this the transmission of digital data is critical and retransmission of corrupted data packets is requested by the remote site.

The transmission of the digital data follows the CCITT V.42 standard, as is well known in the industry and as described in the CCITT Blue Book, volume VIII entitled Data Communication over the Telephone Network, 1989. The CCITT V.42 standard is hereby incorporated by reference. The voice data packet information also follows the CCITT V.42 standard, but uses a different header format so the receiving site recognizes the difference between a data packet and a voice packet. The voice packet is distinguished from a data packet by using undefined bits in the header (80 hex) of the V.42 standard. The packet protocol for voice over data transmission during the show and tell function of the present system is described more fully below.

Since the voice over data communication with the remote site is full-duplex, incoming data packets and incoming voice packets are received by the hardware components of Figure 3. The incoming data packets and voice packets are received through the telephone line interface circuit 309 and passed to the main controller circuit 313 via data pump DSP circuit 311. The incoming data packets are passed by the main controller circuit 313 to the serial interface circuit 315 to be passed to the personal computer. The incoming voice packets are passed by the main controller circuit 313 to the dual port RAM circuit 308 for receipt by the voice control DSP circuit 306. The voice packets are decoded and the compressed digital information therein is uncompressed by the voice control DSP of circuit 306. The uncompressed digital voice information is passed to digital telephone CODEC circuit 305 where it is reconverted to an analog signal and retransmitted through the telephone line interface circuits. In this fashion full-duplex voice and data transmission and reception is accomplished through the hardware components of Figure 3 during the show and tell functional operation of the present system.

Terminal operation 125 of the present system is also supported by the hardware components of Figure 3. Terminal operation means that the local personal computer simply operates as a "dumb" terminal including file transfer capabilities. Thus no local processing takes place other than the handshaking protocol required for the operation of a dumb terminal. In terminal mode operation, the remote site is assumed to be a modem connected to a personal computer but the remote site is not necessarily a site which is configured according to the present system. In terminal mode of operation, the command and data information from personal computer is transferred over the RS232 serial interface circuit 315, forwarded by main controller circuit 313 to the data pump circuit 311 where the data is placed on the telephone line via telephone line interface circuit 309.

In a reciprocal fashion, data is received from the telephone line over telephone line interface circuit 309 and simply forwarded by the data pump circuit 311, the main controller circuit 313 over the serial line interface circuit 315 to the personal computer.

As described above, and more fully below, the address book function of the present system is primarily a support function for providing telephone numbers and addresses for the other various functions of the present system.

## Detailed Electrical Schematic Diagrams

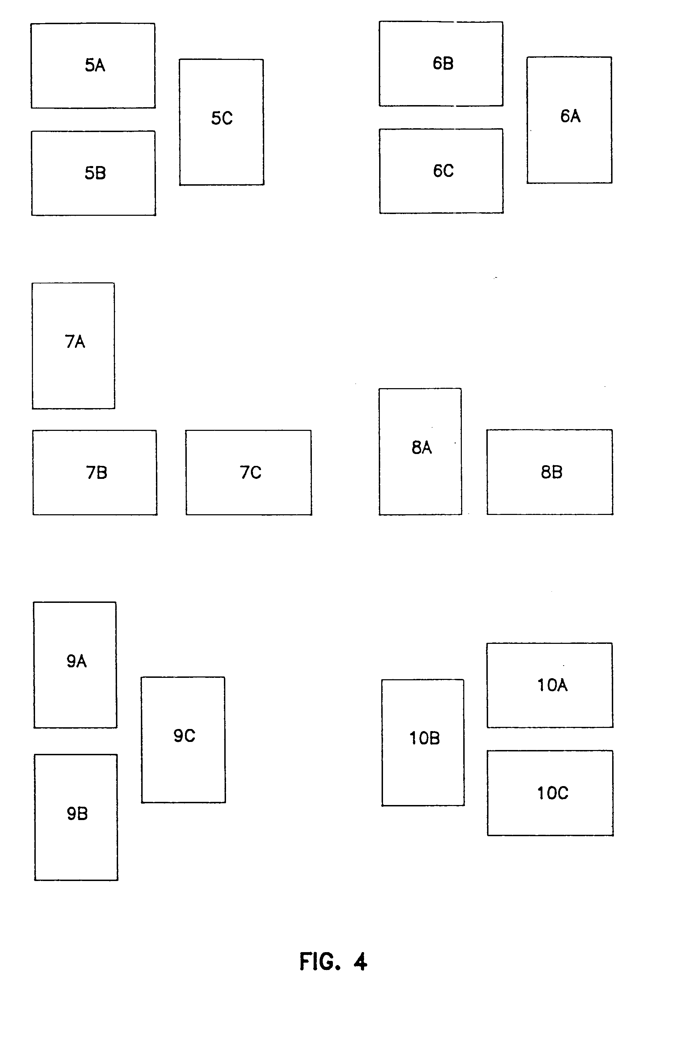

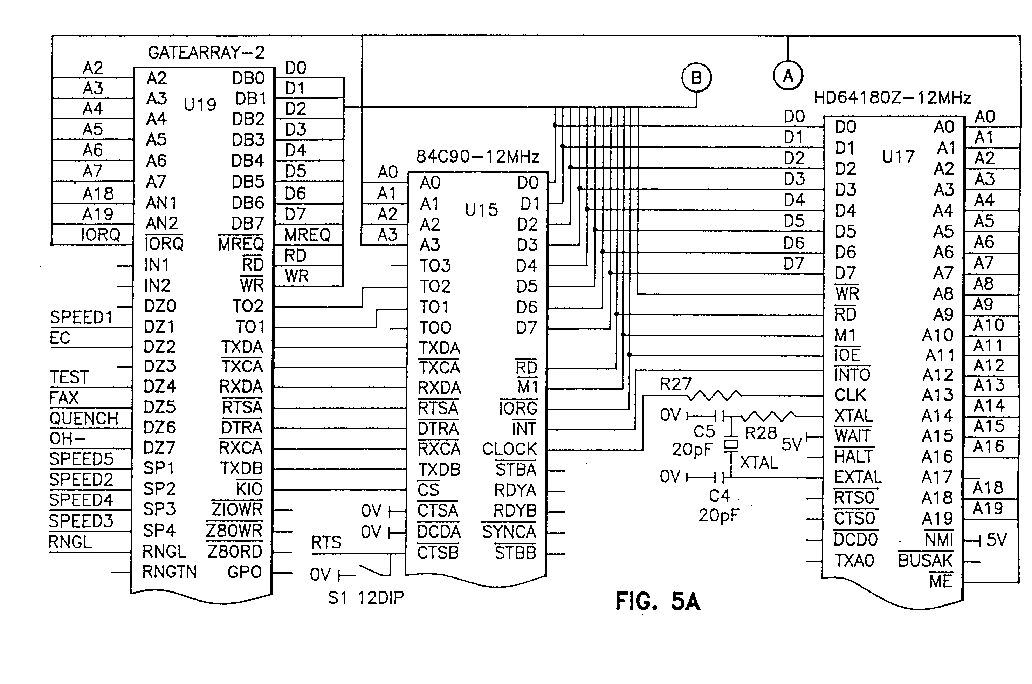

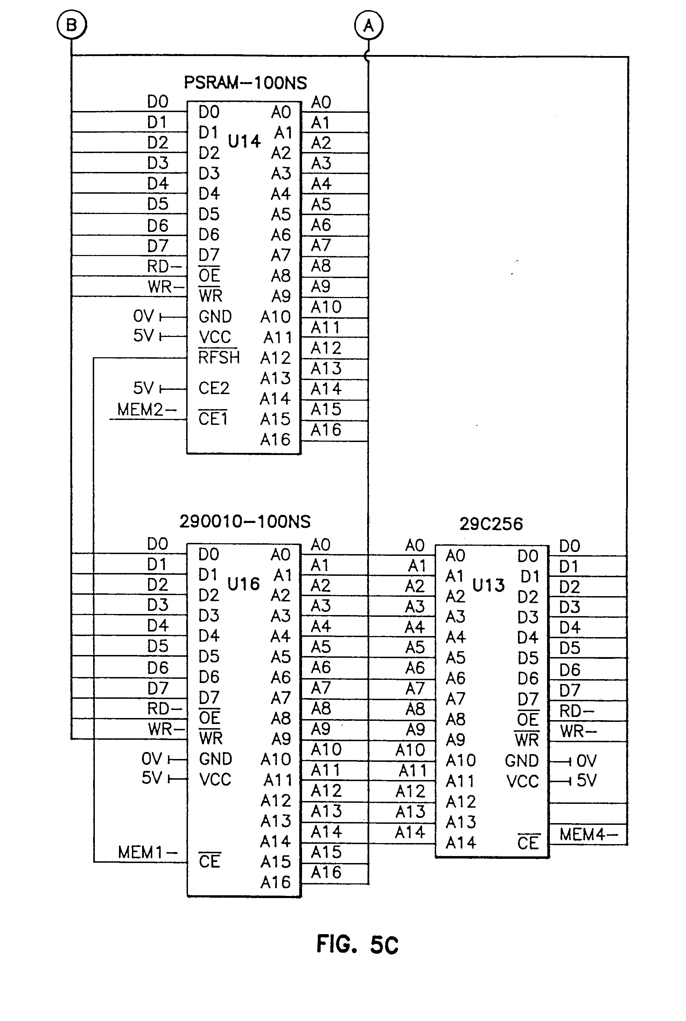

The detailed electrical schematic diagrams comprise Figures 5A-C, 6A-C, 7A-C, 8A-B, 9A-C and 10A-C. Figure 4 shows a key on how the schematic diagrams may be conveniently arranged to view the passing of signals on the electrical lines between the diagrams. The electrical connections between the electrical schematic diagrams are through the designators listed next to each wire. For example, on the right side of Figure 5A, address lines A0-A19 are attached to an address bus for which the individual electrical lines may appear on other pages as A0-A19 or may collectively be connected to other schematic diagrams through the designator "A" in the circle connected to the collective bus. In a like fashion, other electrical lines designated with symbols such as RNGL on the lower left-hand side of Figure 5A may connect to other schematic diagrams using the same signal designator RNGL.

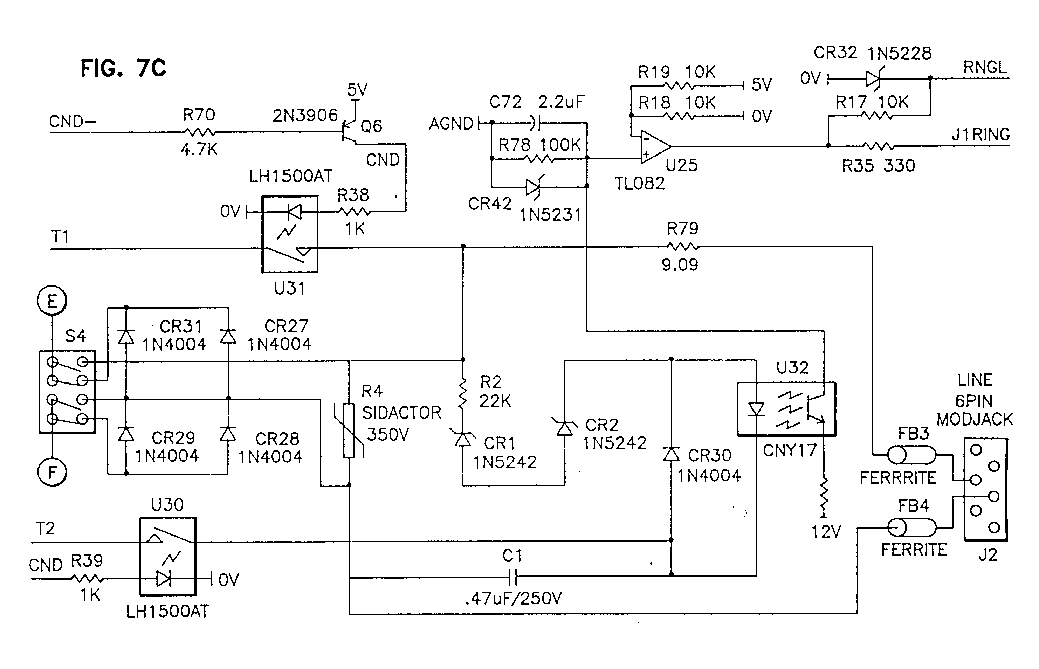

Beginning with the electrical schematic diagram of Figure 7C, the telephone line connection in the preferred embodiment is through connector J2 which is a standard six-pin modular RJ-11 jack. In the schematic diagram of Figure 7C, only the tip and ring connections of the first telephone circuit of the RJ-11 modular connector are used. Ferrite beads FB3 and FB4 are placed on the tip and ring wires of the telephone line connections to remove any high frequency or RF noise on the incoming telephone line. The incoming telephone line is also overvoltage protected through SIDACTOR R4. The incoming telephone line may be full wave rectified by the full wave bridge comprised of diodes CR27, CR28, CR29 and CR31. Switch S4 switches between direct connection and full wave rectified connection depending upon whether the line is a non-powered leased line or a standard telephone line. Since a leased line is a "dead" line with no voltage, the full-wave rectification is not needed.

Also connected across the incoming telephone line is a ring detect circuit. Optical isolator U32 (part model number CNY17) senses the ring voltage threshold when it exceeds the breakdown voltages on zener diodes CR1 and CR2. A filtering circuit shown in the upper right corner of Figure 7C creates a long RC delay to sense the constant presence of an AC ring voltage and buffers that signal to be a binary signal out of operational amplifier U25 (part model number TLO82). Thus, the RNGL and J1RING signals are binary signals for use in the remaining portions of the electrical schematic diagrams to indicate a presence of a ring voltage on the telephone line.

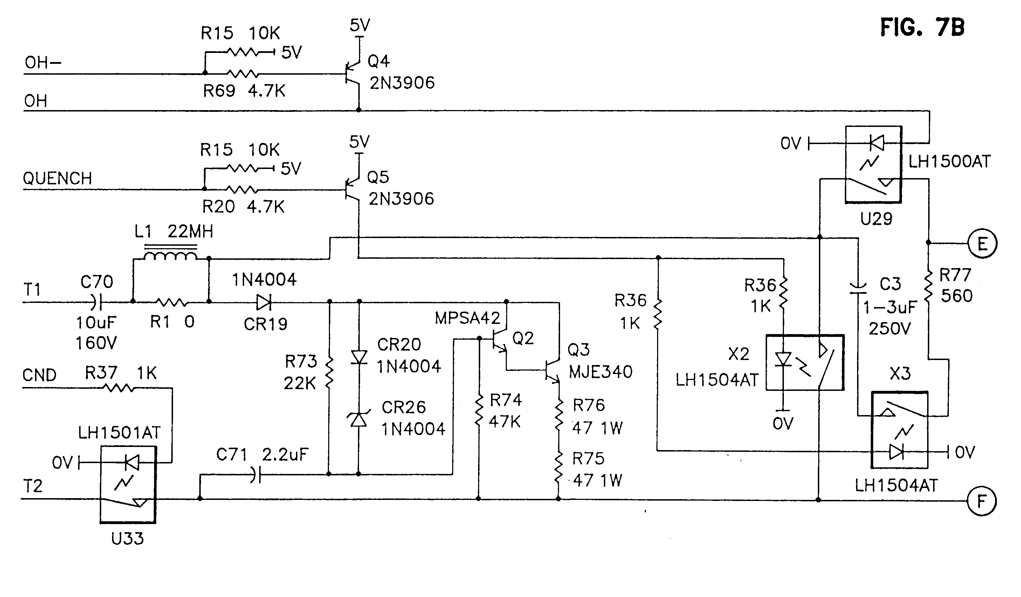

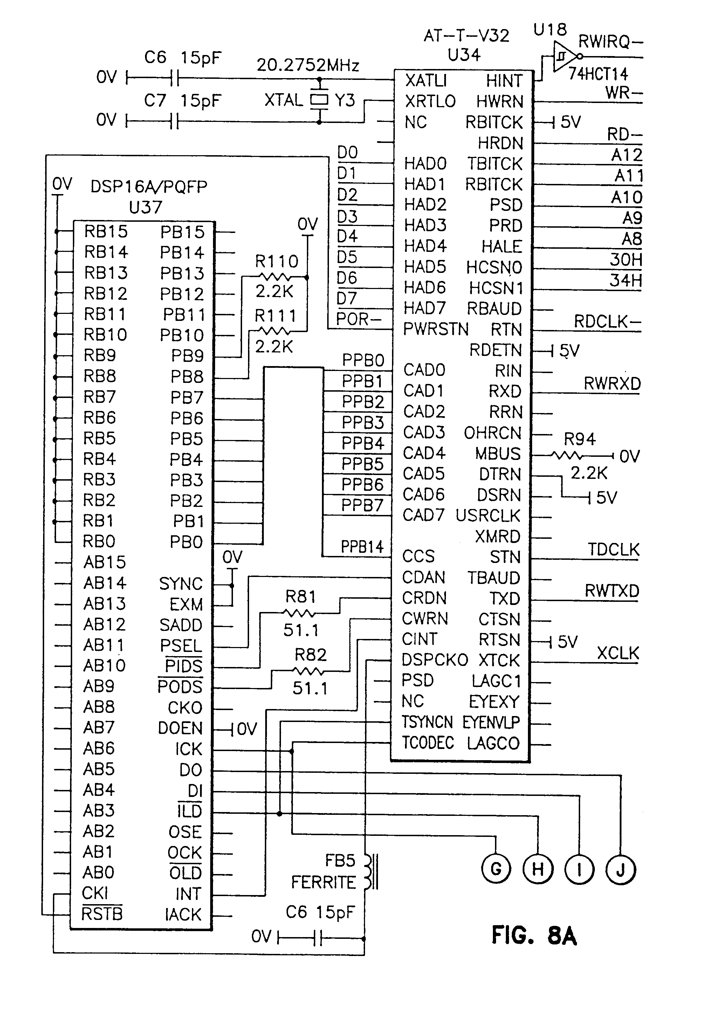

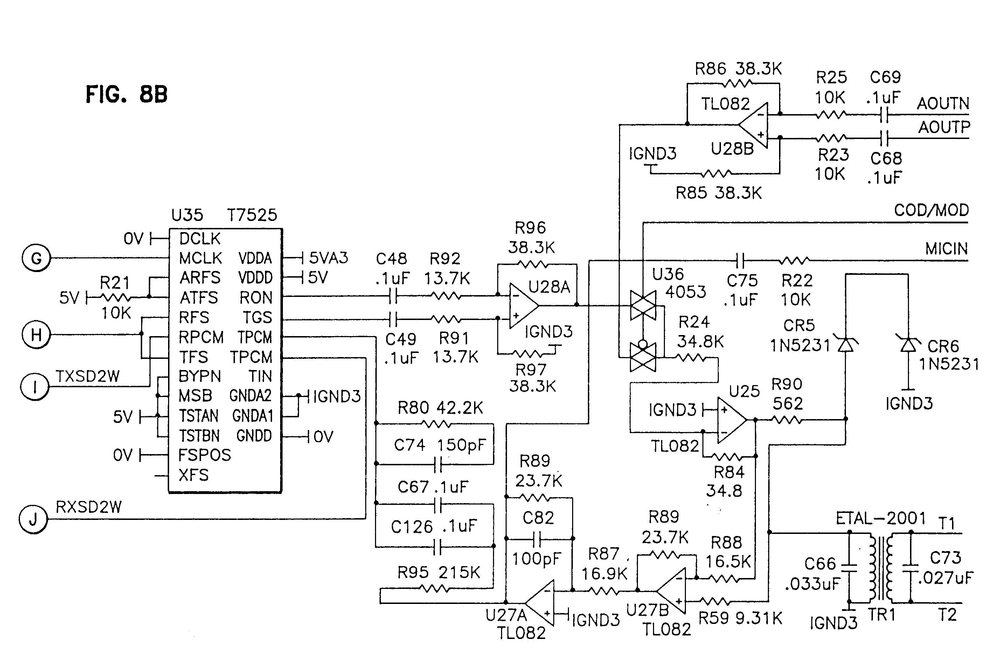

The present system is also capable of sensing the caller ID information which is transmitted on the telephone line between rings. Between the rings, optically isolated relays U30, U31 on Figure 7C and optically isolated relay U33 on Figure 7B all operate in the period between the rings so that the FSK modulated caller ID information is connected to the CODEC and data pump DSP in Figures 8A and 8B, as described more fully below.

Referring now to Figure 7B, more of the telephone line filtering circuitry is shown. Some of the telephone line buffering circuitry such as inductor L1 and resistor R1 are optional and are connected for various telephone line standards used around the word to meet local requirements. For example, Switzerland requires a 22 millihenry inductor and 1K resistor in series the line. For all other countries, the 1K resistor is replaced with a 0 ohm resistor.

Relay U29 shown in Figure 7B is used to accomplish pulse dialing by opening and shorting the tip and ring wires. Optical relay X2 is engaged during pulse dialing so that the tip and ring are shorted directly. Transistors Q2 and Q3 along with the associated discrete resistors comprise a holding circuit to provide a current path or current loop on the telephone line to grab the line.

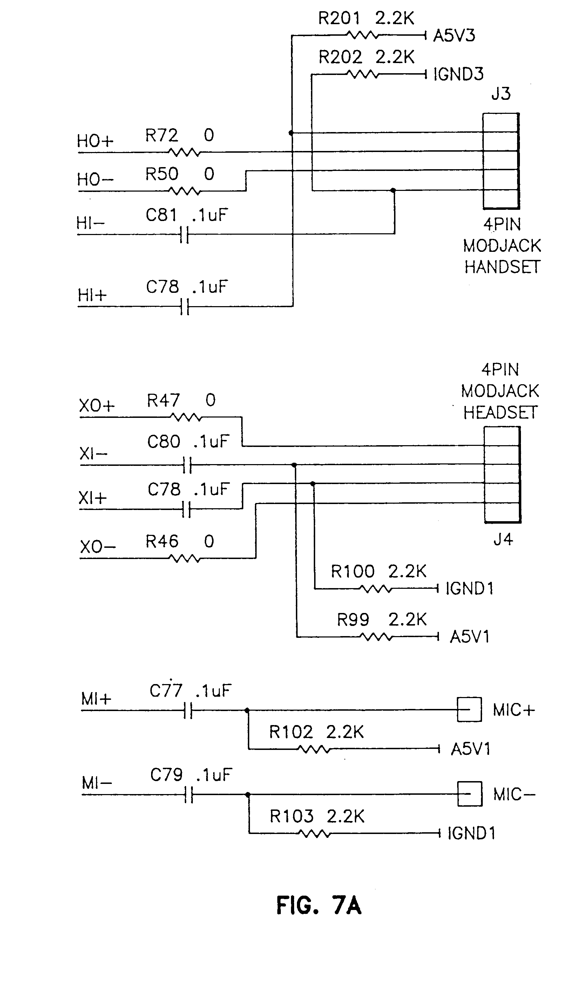

Figure 7A shows the telephone interface connections between the hardware components of the present system and the handset, headset and microphone.

The connections T1 and T2 for the telephone line from Figure 7B are connected to transformer TR1 shown in the electrical schematic diagram of Figure 8B. Only the AC components of the signal pass through transformer TR1. The connection of signals attached to the secondary of TR1 is shown for both transmitting and receiving information over the telephone line.

Incoming signals are buffered by operational amplifiers U27A and U27B. The first stage of buffering using operational amplifier U27B is used for echo suppression so that the transmitted information being placed on the telephone line is not fed back into the receive portion of the present system. The second stage of the input buffering through operational amplifier U27A is configured for a moderate amount of gain before driving the signal into CODEC U35.

CODEC chip U35 on Figure 8B, interface chip U34 on Figure 8A and digital signal processor (DSP) chip U37 on Figure 8A comprise a data pump chip set manufactured and sold by AT&T Microelectronics. A detailed description of the operation of these three chips in direct connection and cooperation with one another is described in the publication entitled "AT&T V.32bis/V.32/FAX High-Speed Data Pump Chip Set Data Book" published by AT&T Microelectronics, December 1991, which is hereby incorporated by reference. This AT&T data pump chip set comprises the core of an integrated, two-wire full duplex modem which is capable of operation over standard telephone lines or leased lines. The data pump chip set conforms to the telecommunications specifications in CCITT recommendations V.32bis, V.32, V.22bis, V.22, V.23, V.21 and is compatible with the Bell 212A and 103 modems. Speeds of 14,400, 9600, 4800, 2400, 1200, 600 and 300 bits per second are supported. This data pump chip set consists of a ROM-coded DSP16A digital signal processor U37, and interface chip U34 and an AT&T T7525 linear CODEC U35. The AT&T V.32 data pump chip set is available from AT&T Microelectronics.

The chip set U34, U35 and U37 on Figures 8A and 8B perform all A/D, D/A, modulation, demodulation and echo cancellation of all signals placed on or taken from the telephone line. The CODEC U35 performs DTMF tone generation and detection, signal analysis of call progress tones, etc. The transmission of information on the telephone line from CODEC U35 is through buffer U28A, through CMOS switch U36 and through line buffer U25. The CMOS switch U36 is used to switch between the data pump chip set CODEC of circuit 310 (shown in Figure 3) and the voice control CODEC of circuit 306 (also shown in Figure 3). The signal lines AOUTN and AOUTP correspond to signals received from the voice control CODEC of circuit 306. CODEC U35 is part of circuit 311 of Figure 3.

The main controller of controller circuit 313 and the support circuits 312, 314, 316, 317 and 308 are shown in Figures 5A-5C. In the preferred embodiment of the present system, the main controller is a Z80180 eight-bit microprocessor chip. In the preferred implementation, microcontroller chip U17 is a Z80180 microprocessor, part number Z84CO1 by Zilog, Inc. of Campbell, California (also available from Hitachi Semiconductor as part number HD64180Z). The Zilog Z80180 eight-bit microprocessor operates at 12 MHz internal clock speed by means of an external crystal XTAL, which in the preferred embodiment, is a 24.576 MHz crystal. The crystal circuit includes capacitors C4 and C5 which are 20 pf capacitors and resistor R28 which is a 33 ohm resistor. The crystal and support circuitry is connected according to manufacturer's specifications found in the Zilog Intelligent Peripheral Controllers Data Book published by Zilog, Inc. The product description for the Z84CO1 Z80180 CPU from the Z84C01 Z80 CPU Product Specification pgs. 43-73 of the Zilog 1991 Intelligent Peripheral Controllers databook is hereby incorporated by reference.

The Z80180 microprocessor in microcontroller chip U17 is intimately connected to a serial/parallel I/O counter timer chip U15 which is, in the preferred embodiment, a Zilog 84C90 CMOS Z80 KIO serial/parallel/counter/timer integrated circuit available from Zilog, Inc. This multi-function I/O chip U15 combines the functions of a parallel input/output port, a serial input/output port, bus control circuitry, and a clock timer circuit in one chip. The Zilog Z84C90 product specification describes the detailed internal operations of this circuit in the Zilog Intelligent Peripheral Controllers 1991 Handbook available from Zilog, Inc. Z84C90 CMOS Z80KIO Product specification pgs. 205-224 of the Zilog 1991 Intelligent Peripheral Controllers databook is hereby incorporated by reference.

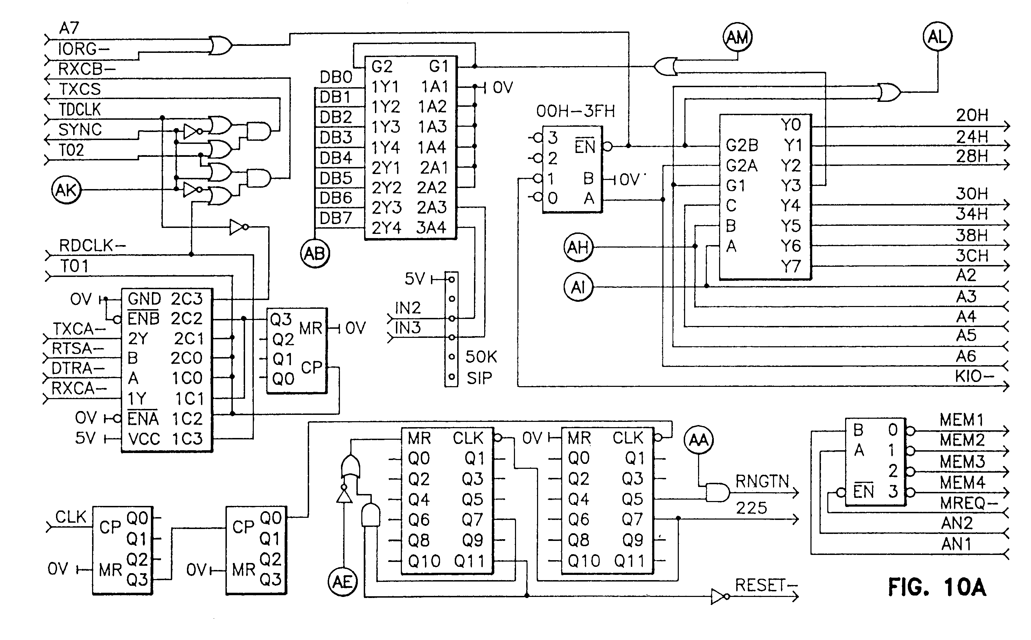

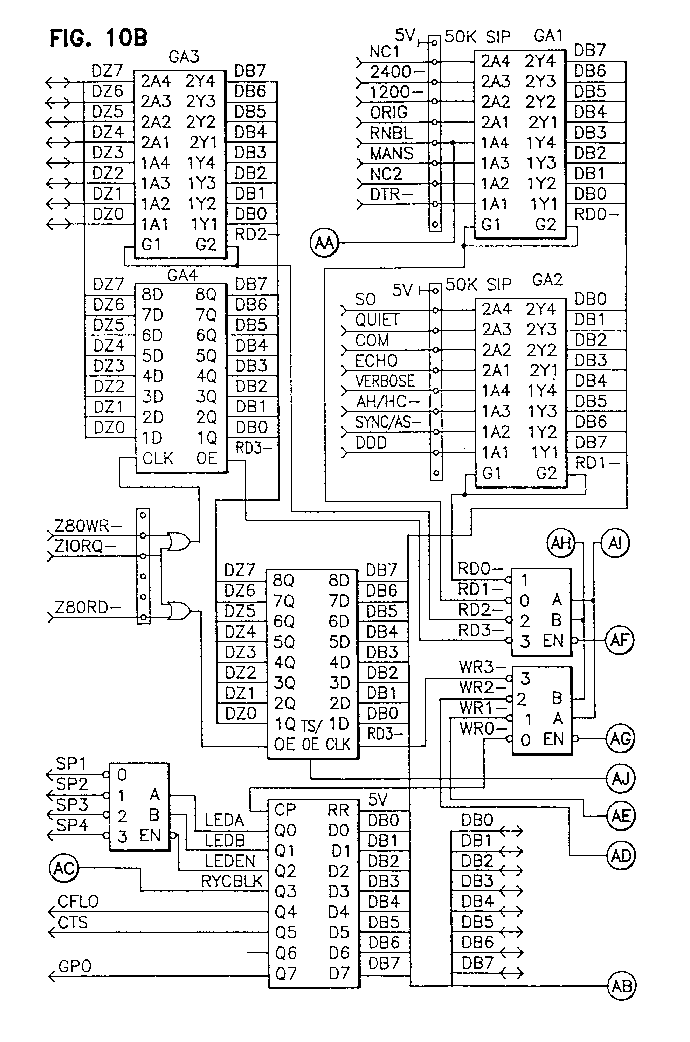

Data and address buses A and B shown in Figure 5A connect the Z80180 microprocessor in microcontroller U17 with the Z80 KIO circuit U15 and a gate array circuit U19, and to other portions of the electrical schematic diagrams. The gate array U19 includes miscellaneous latch and buffer circuits for the present system which normally would be found in discrete SSI or MSI integrated circuits. By combining a wide variety of miscellaneous support circuits into a single gate array, a much reduced design complexity and manufacturing cost is achieved. A detailed description of the internal operations of gate array U19 is described more fully below in conjunction with schematic diagrams of Figures 10A-10C.

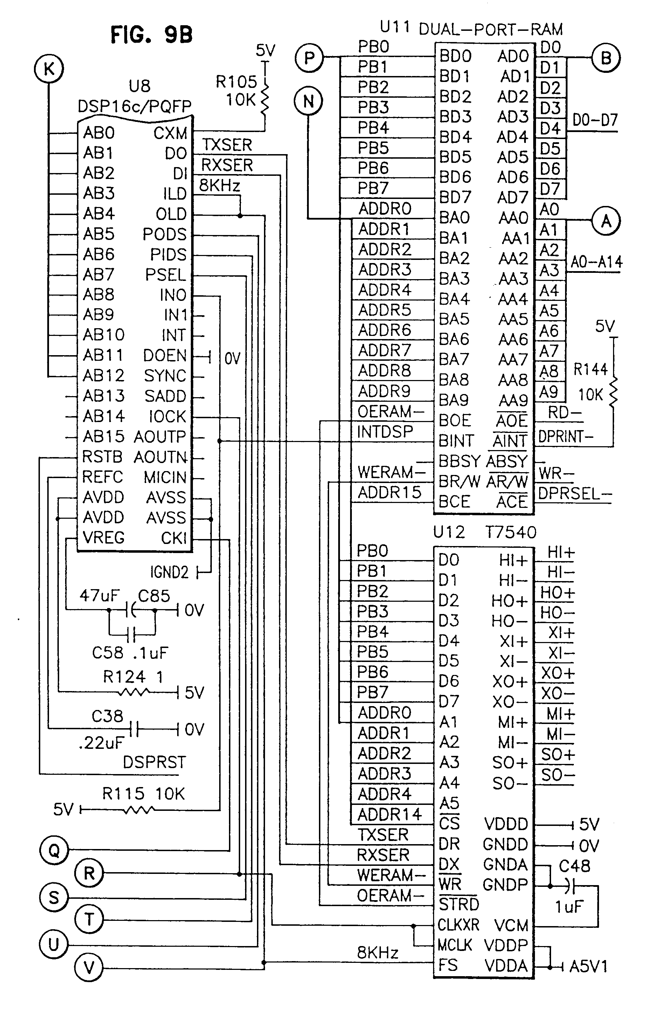

The memory chips which operate in conjunction with the Z80 microprocessor in microcontroller chip U17 are shown in Figure 5C. The connections A, B correspond to the connections to the address and data buses, respectively, found on Figure 5A. Memory chips U16 and U13 are read-only memory (ROM) chips which are electrically alterable in place. These programmable ROMs, typically referred to as flash PROMs or Programmable Erasable Read Only Memories (PEROMs) hold the program code and operating parameters for the present system in a non-volatile memory. Upon power-up, the programs and operating parameters are transferred to the voice control DSP RAM U12, shown in Figure 9B.

In the preferred embodiment, RAM chip U14 is a pseudostatic RAM which is essentially a dynamic RAM with a built-in refresh. Those skilled in the art will readily recognize that a wide variety memory chips may be used and substituted for pseudo-static RAM U14 and flash PROMs U16 and U13.

EP 0 669 749 A1

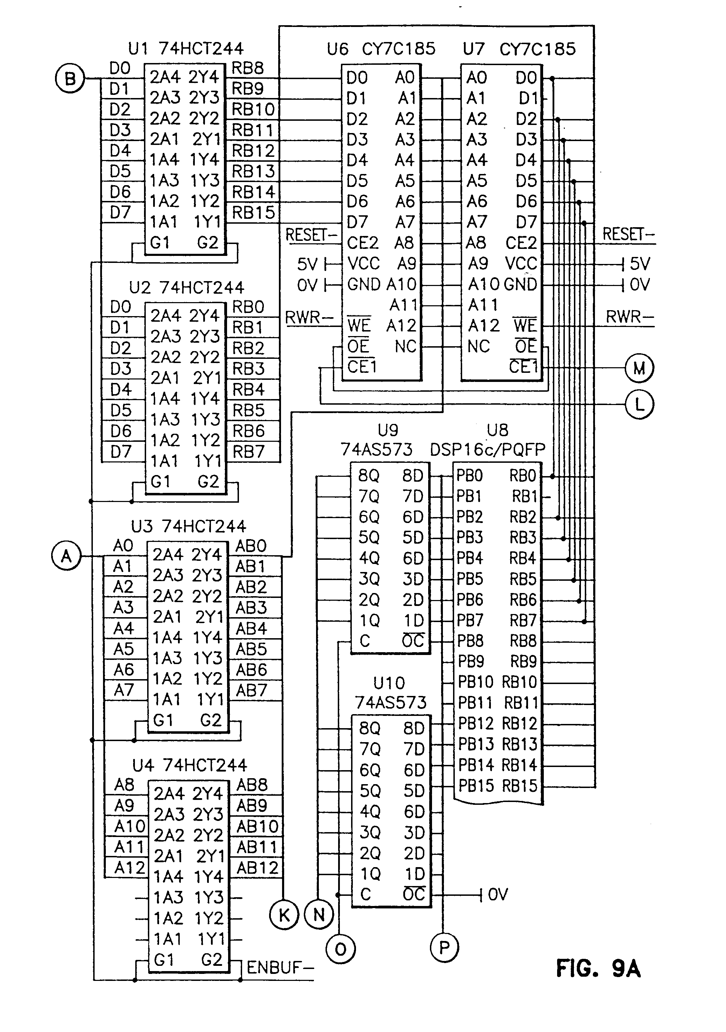

Referring once again to Figure 3, the main controller circuit 313 communicates with the voice control DSP of circuit 306 through dual port RAM circuit 308. The digital telephone CODEC circuit 305, the voice control DSP and CODEC circuit 306, the DSP RAM 307 and the dual port RAM 308 are all shown in detailed electrical schematic diagrams of Figures 9A-9C.

Referring to Figure 9A, the DSP RAM chips U6 and U7 are shown with associated support chips. Support chips U1 and U2 are in the preferred embodiment part 74HCT244 which are TTL-level latches used to capture data from the data bus and hold it for the DSP RAM chips U6 and U7. Circuits U3 and U4 are also latch circuits for also latching address information to control DSP RAM chips U6 and U7. Once again, the address bus A and data bus B shown in Figure 9A are multi-wire connections which, for the clarity of the drawing, are shown as a thick bus wire representing a grouping of individual wires.

Also in Figure 9A, the DSP RAMs U6 and U7 are connected to the voice control DSP and CODEC chip U8 as shown split between Figures 9A and 9B. DSP/CODEC chip U8 is, in the preferred embodiment, part number *WE®* DSP16C, digital signal processor and CODEC chip manufactured and sold by AT&T Microelectronics. This is a 16-bit programmable DSP with a voice band sigma-delta CODEC on one chip. Although the CODEC portion of this chip is capable of analog-to-digital and digital-to-analog signal acquisition and conversion system, the actual D/A and A/D functions for the telephone interface occur in digital telephone CODEC chip U12 (corresponding to digital telephone CODEC circuit 305 of Figure 3). Chip U8 includes circuitry for sampling, data conversion, anti-aliasing filtering and anti-imaging filtering. The programmable control of DSP/CODEC chip U8 allows it to receive digitized voice from the telephone interface (through digital telephone CODEC chip U12) and store it in a digitized form in the dual port RAM chip U11. The digitized voice can then be passed to the main controller circuit 313 where the digitized voice may be transmitted to the personal computer over the RS232 circuit 315. In a similar fashion, digitized voice stored by the main controller circuit 313 in the dual port RAM U11 may be transferred through voice control DSP chip U8, converted to analog signals by telephone CODEC U12 and passed to the user. Digital telephone CODEC chip U12 includes a direct telephone handset interface on the chip.

The connections to DSP/CODEC chip U8 are shown split across Figures 9A and 9B. Address/data decode chips U9 and U10 on Figure 9A serve to decode address and data information from the combined address/data bus for the dual port RAM chip U11 of Figure 9B. The interconnection of the DSP/CODEC chip U8 shown on Figures 9A and 9B is described more fully in the *WE®* DSP16C Digital Signal Processor/CODEC Data Sheet published May, 1991 by AT&T Microelectronics, which is hereby incorporated by reference.

The Digital Telephone CODEC chip U12 is also shown in Figure 9B which, in the preferred embodiment, is part number T7540 Digital Telephone CODEC manufactured and sold by AT&T Microelectronics. A more detailed description of this telephone CODEC chip U12 is described in the T7540 Digital Telephone CODEC Data Sheet and Addendum published July, 1991 by AT&T Microelectronics, which is hereby incorporated by reference.

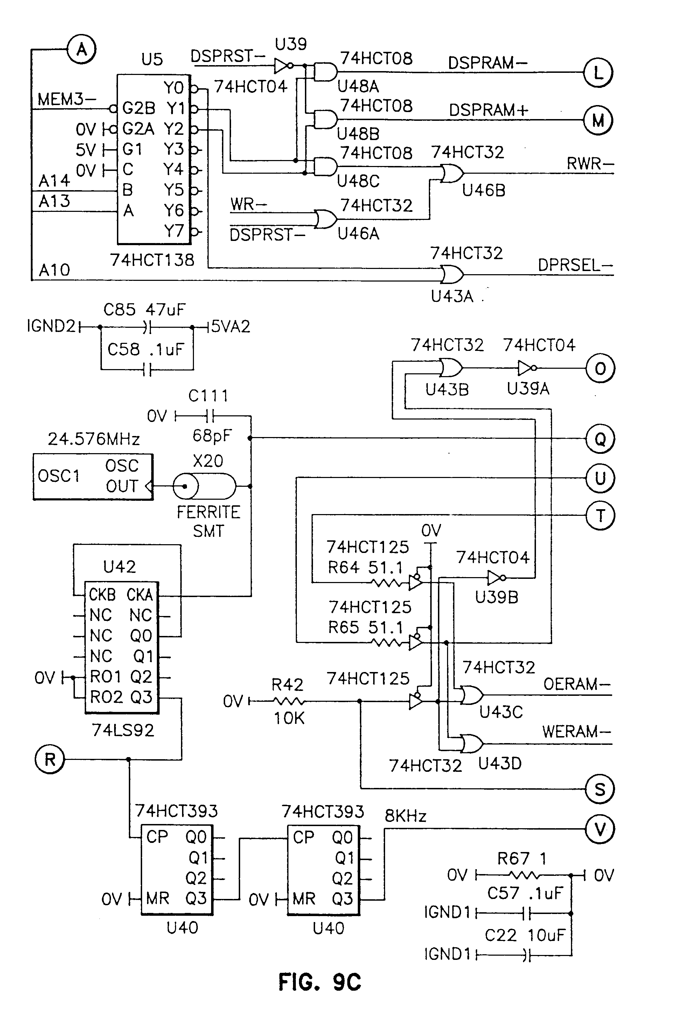

Support circuits shown on Figure 9C are used to facilitate communication between CODEC chip U12, DSP/CODEC chip U8 and dual port RAM U11. For example, an 8 kHz clock is used to synchronize the operation of CODEC U12 and DSP/CODEC U8.

The operation of the dual port RAM U11 is controlled both by DSP U8 and main controller chip U17. The dual port operation allows writing into one address while reading from another address in the same chip. Both processors can access the exact same memory locations with the use of a contention protocol such that when one is reading the other cannot be writing. In the preferred embodiment, dual port RAM chip U11 is part number CYZC131 available from Cyprus Semiconductor. This chip includes built in contention control so that if two processors try to access the same memory location at the same time, the first one making the request gets control of the address location and the other processor must wait. In the preferred embodiment, a circular buffer is arranged in dual port RAM chip U11 comprising 24 bytes. By using a circular buffer configuration with pointers into the buffer area, both processors will not have a contention problem.

The DSP RAM chips U6 and U7 are connected to the DSP chip U8 and also connected through the data and address buses to the Zilog microcontroller U17. In this configuration, the main controller can download the control programs for DSP U8 into DSP RAMs U6 and U7. In this fashion, DSP control can be changed by the main controller or the operating programs on the personal computer, described more fully below. The control programs stored in DSP chips U6 and U7 originate in the flash PEROM chips U16 and U17. The power-up control routine operating on controller chip U17 downloads the DSP control routines into DSP RAM chips U6 and U7.

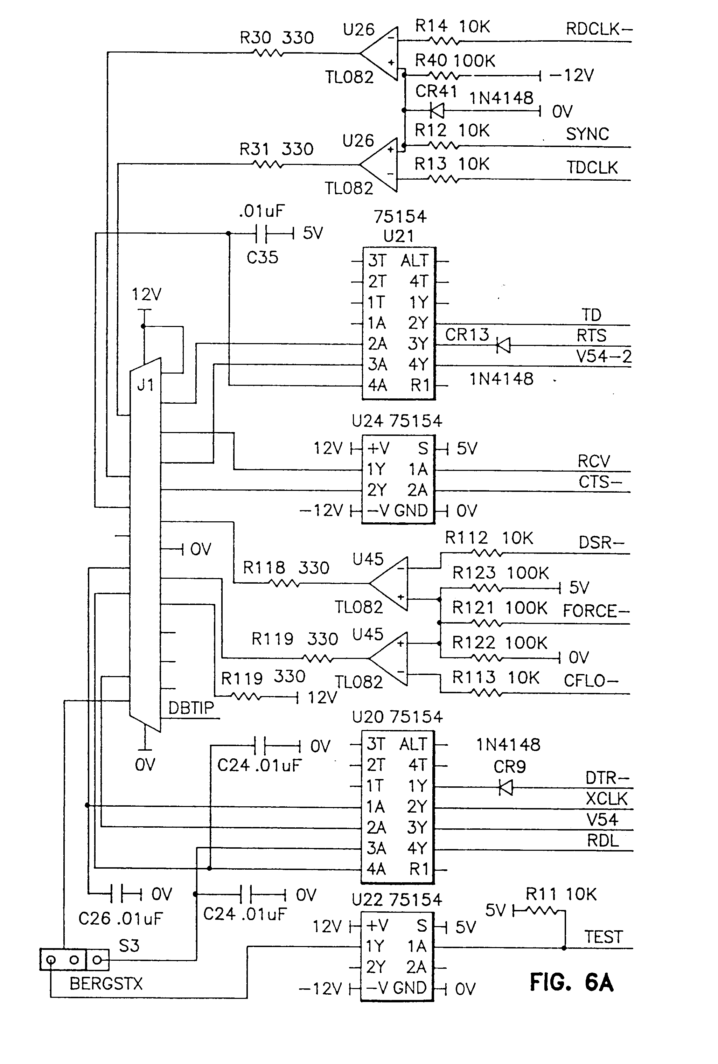

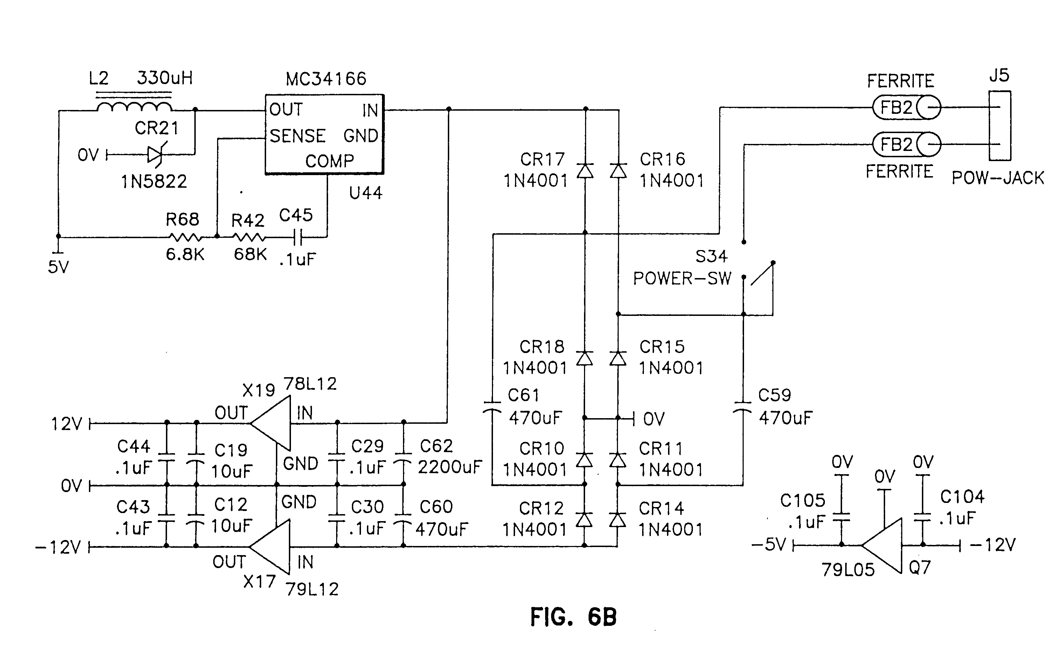

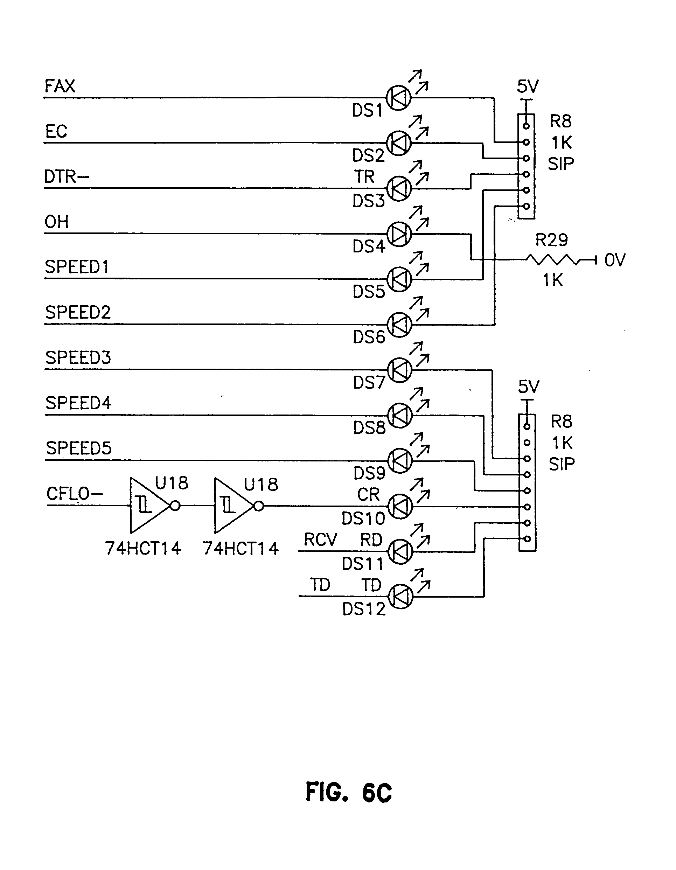

The interface between the main controller circuit 313 and the personal computer is through SIO circuit 314 and RS232 serial interface 315. These interfaces are described more fully in conjunction with the detailed electrical schematic diagrams of Figure 6A-6C. RS232 connection J1 is shown on Figure 6A with the associated control circuit and interface circuitry used to generate and receive the appropriate RS232 standard signals for a serial communications interface with a personal computer. Figure 6B is a detailed electrical schematic diagram showing the generation of various voltages for powering the hardware components of the electrical schematic diagrams of hardware components 20. The power for the present hardware components is received on connector J5 and controlled by power switch S34. From this circuitry of Figure 6B, plus and minus 12 volts, plus five volts and minus five volts are derived for operating the various RAM chips, controller chips and support circuitry of the present system. Figure 6C shows the interconnection of the status LED's found on the front display of the box 20.

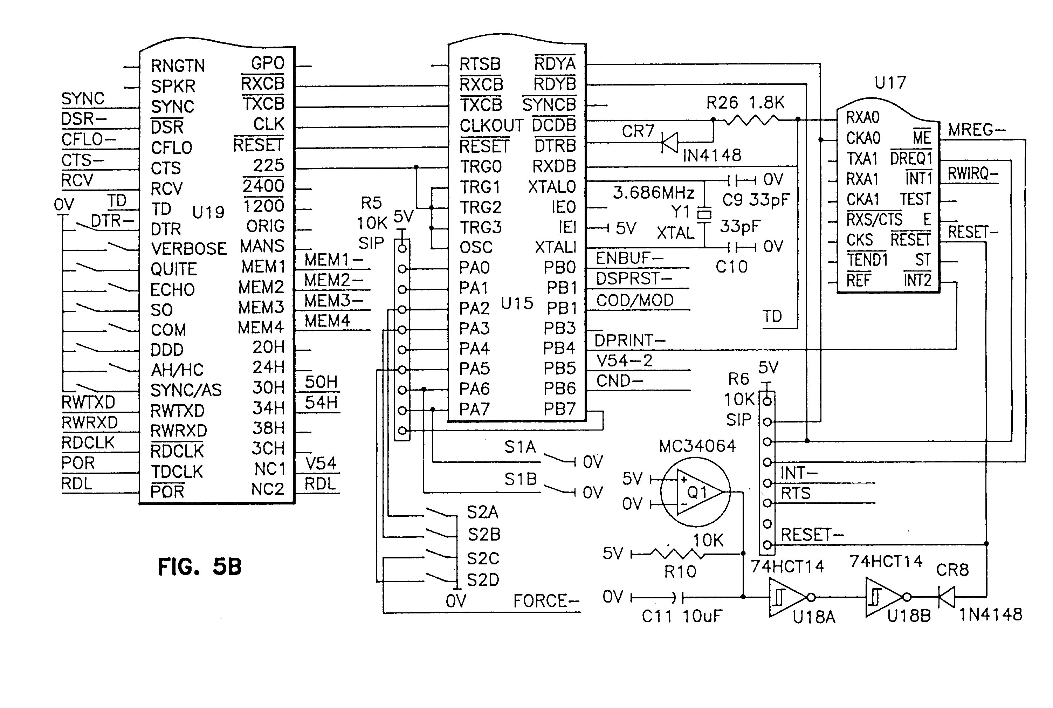

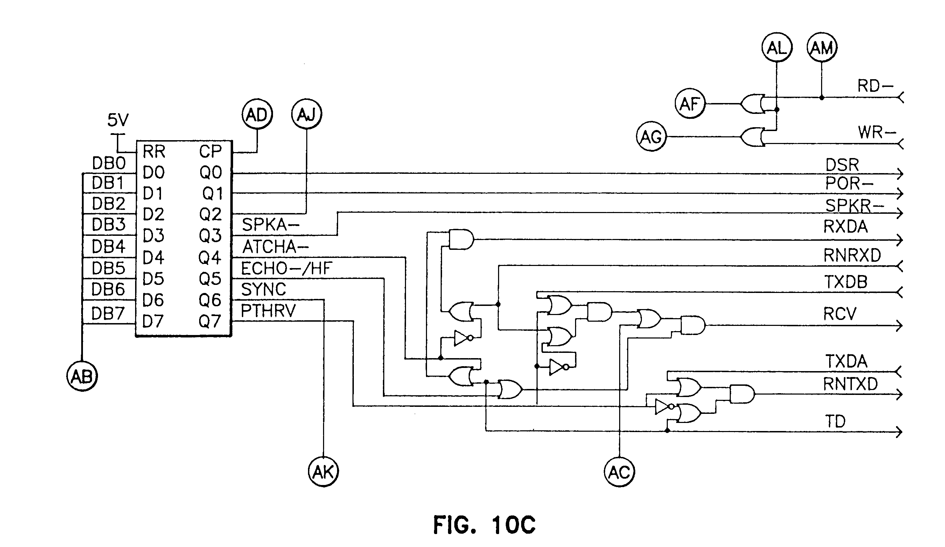

Finally, the "glue logic" used to support various functions in the hardware components 20 are described in conjunction with the detailed electrical schematic diagrams of Figures 10A-10C. The connections between Figures 10A and 10C and the previous schematic diagrams is made via the labels for each of the lines. For example, the LED status lights are controlled and held active by direct addressing and data control of latches GA1 and GA2. For a more detailed description of the connection of the glue logic of Figures 10A-10C, the gate array U19 is shown connected in Figures 5A and 5B.

Packet Protocol Between the PC and the Hardware Component

A special packet protocol is used for communication between the hardware components 20 and the personal computer (PC) 10. The protocol is used for transferring different types of information between the two devices such as the transfer of DATA, VOICE, and QUALIFIED information. The protocol also uses the BREAK as defined in CCITT X.28 as a means to maintain protocol synchronization. A description of this BREAK sequence is also described in the Statutory Invention Registration entitled "ESCAPE METHODS FOR MODEM COMMUNICATIONS", to Timothy D. Gunn filed January 8, 1993, which is hereby incorporated by reference.

The protocol has two modes of operation. One mode is packet mode and the other is stream mode. The protocol allows mixing of different types of information into the data stream without having to physically switch modes of operation. The hardware component 20 will identify the packet received from the computer 10 and perform the appropriate action according to the specifications of the protocol. If it is a data packet, then the controller 313 of hardware component 20 would send it to the data pump circuit 311. If the packet is a voice packet, then the controller 313 of hardware component 20 would distribute that information to the Voice DSP 306. This packet transfer mechanism also works in the reverse, where the controller 313 of hardware component 20 would give different information to the computer 10 without having to switch into different modes. The packet protocol also allows commands to be sent to either the main controller 313 directly or to the Voice DSP 306 for controlling different options without having to enter a command state.

Packet mode is made up of 8 bit asynchronous data and is identified by a beginning synchronization character (01 hex) followed by an ID/LI character and then followed by the information to be sent. In addition to the ID/LI character codes defined below, those skilled in the art will readily recognize that other ID/LI character codes could be defined to allow for additional types of packets such as video data, or alternate voice compression algorithm packets such as Codebook Excited Linear Predictive Coding (CELP) algorithm, GSM, RPE, VSELP, etc.

Stream mode is used when large amounts of one type of packet (VOICE, DATA, or QUALIFIED) is being sent. The transmitter tells the receiver to enter stream mode by a unique command. Thereafter, the transmitter tells the receiver to terminate stream mode by using the BREAK command followed by an "AT" type command. The command used to terminate the stream mode can be a command to enter another type of stream mode or it can be a command to enter back into packet mode.

Currently there are 3 types of packets used: DATA, VOICE, and QUALIFIED. Table 1 shows the common packet parameters used for all three packet types. Table 2 shows the three basic types of packets with the sub-types listed.

## TABLE 1: Packet Parameters

1. Asynchronous transfer
2. 8 bits, no parity
3. Maximum packet length of 128 bytes
   - IDentifier byte = 1
   - InFormation = 127
4. SPEED
   - variable from 9600 to 57600
   - default to 19200

## TABLE 2: Packet Types

1. Data
2. Voice
3. Qualified:
   a. COMMAND
   b. RESPONSE
   c. STATUS
   d. FLOW CONTROL
   e. BREAK
   f. ACK
   g. NAK
   h. STREAM

A Data Packet is shown in Table 1 and is used for normal data transfer between the controller 313 of hardware component 20 and the computer 10 for such things as text, file transfers, binary data and any other type of information presently being sent through modems. All packet transfers begin with a synch character 01 hex (synchronization byte). The Data Packet begins with an ID byte which specifies the packet type and packet length. Table 3 describes the Data Packet byte structure and Table 4 describes the bit structure of the ID byte of the Data Packet. Table 5 is an example of a Data Packet with a byte length of 6. The value of the LI field is the actual length of the data field to follow, not counting the ID byte.

13

## TABLE 3: Data Packet Byte Structure

byte 1         =    01h (sync byte)
byte 2         =    ID/LI (ID byte/length indicator)
bytes 3-127    =    data (depending on LI)

| 01 SYNC | ID LI | data | data | data | data | | data |
|---------|-------|------|------|------|------|--|------|

## TABLE 4: ID Byte of Data Packet

Bit 7 identifies the type of packet
Bits 6 - 0 contain the LI or length indicator
portion of the ID byte

| 7 | 6 | 5 | 4 | 3 | 2 | 1 | 0 |
|---|---|---|---|---|---|---|---|
| 0 | LI (Length Indicator) = 1 to 127 | | | | | | |

## TABLE 5: Data Packet Example

LI (length indicator) = 6

| 01 SYNC | 06 ID | data | data | data | data | data | data |
|---------|-------|------|------|------|------|------|------|

The Voice Packet is used to transfer compressed VOICE messages between the controller 313 of hardware component 20 and the computer 10. The Voice Packet is similar to the Data Packet except for its length which is, in the preferred embodiment, currently fixed at 23 bytes of data. Once again, all packets begin with a synchronization character chosen in the preferred embodiment to be 01 hex (01H). The ID byte of the Voice Packet is completely a zero byte: all bits are set to zero. Table 6 shows the ID byte of the Voice Packet and Table 7 shows the Voice Packet byte structure.

## TABLE 6: ID Byte of Voice Packet

| 7 | 6 | 5 | 4 | 3 | 2 | 1 | 0 |
|---|---|---|---|---|---|---|---|
| 0 | LI (Length Indicator) = 0 | | | | | | |

## TABLE 7: Voice Packet Byte Structure

LI (length indicator) = 0
23 bytes of data

| 01 SYNC | 00 ID | data | data | data | data | | data |
|---|---|---|---|---|---|---|---|

The Qualified Packet is used to transfer commands and other non-data/voice related information between the controller 313 of hardware component 20 and the computer 10. The various species or types of the Qualified Packets are described below and are listed above in Table 2. Once again, all packets start with a synchronization character chosen in the preferred embodiment to be 01 hex (01H). A Qualified Packet starts with two bytes where the first byte is the ID byte and the second byte is the QUALIFIER type identifier. Table 8 shows the ID byte for the Qualified Packet, Table 9 shows the byte structure of the Qualified Packet and Tables 10-12 list the Qualifier Type byte bit maps for the three types of Qualified Packets.

## TABLE 8: ID Byte of Qualified Packet

| 7 | 6 | 5 | 4 | 3 | 2 | 1 | 0 |
|---|---|---|---|---|---|---|---|
| 1 | LI (Length Indicator) = 1 to 127 | | | | | | |

The Length Identifier of the ID byte equals the amount of data which follows including the QUALIFIER byte (QUAL byte + DATA). If LI = 1, then the Qualifier Packet contains the Q byte only.

## TABLE 9: Qualifier Packet Byte Structure

| 01 SYNC | 85 ID | QUAL BYTE | data | data | data | | data |
|---|---|---|---|---|---|---|---|

The bit maps of the Qualifier Byte (QUAL BYTE) of the Qualified Packet are shown in Tables 10-12. The bit map follows the pattern whereby if the QUAL byte = 0, then the command is a break. Also, bit 1 of the QUAL byte designates ack/nak, bit 2 designates flow control and bit 6 designates stream mode command. Table 10 describes the Qualifier Byte of Qualified Packet, Group 1 which are immediate commands. Table 11 describes the Qualifier Byte of Qualified Packet, Group 2 which are stream mode commands in that the command is to stay in the designated mode until a BREAK + INIT command string is sent. Table 12 describes the Qualifier Byte of Qualified Packet, Group 3 which are information or status commands.

### TABLE 10: Qualifier Byte of Qualified Packet: Group 1

```
7  6  5  4  3  2  1  0
x  x  x  x  x  x  x  x
----------------------
0  0  0  0  0  0  0  0   = break
0  0  0  0  0  0  1  0   = ACK
0  0  0  0  0  0  1  1   = NAK
0  0  0  0  0  1  0  0   = xoff or stop sending data
0  0  0  0  0  1  0  1   = xon  or resume sending data

0  0  0  0  1  0  0  0   = cancel fax
```

### TABLE 11: Qualifier Byte of Qualified Packet: Group 2

```
7  6  5  4  3  2  1  0
x  x  x  x  x  x  x  x
----------------------
0  1  0  0  0  0  0  1   = stream command mode
0  1  0  0  0  0  1  0   = stream data
0  1  0  0  0  0  1  1   = stream voice
0  1  0  0  0  1  0  0   = stream video
0  1  0  0  0  1  0  1   = stream A
0  1  0  0  0  1  1  0   = stream B
0  1  0  0  0  1  1  1   = stream C
```

The Qualifier Packet indicating stream mode and BREAK attention is used when a large of amount of information is sent (voice, data...) to allow the highest throughput possible. This command is mainly intended for use in DATA mode but can be used in any one of the possible modes. To change from one mode to another, a break-init sequence would be given. A break "AT...⟨cr⟩" type command would cause a change in state and set the serial rate from the "AT" command.

### TABLE 12: Qualifier Byte of Qualified Packet: Group 3

```
7  6  5  4  3  2  1  0
x  x  x  x  x  x  x  x
----------------------
1  0  0  0  0  0  0  0   = commands
1  0  0  0  0  0  0  1   = responses
1  0  0  0  0  0  1  0   = status
```

Cellular Supervisory Packet

In order to determine the status of the cellular link, a supervisory packet shown in Table 13 is used. Both sides of the cellular link will send the cellular supervisory packet every 3 seconds. Upon receiving the cellular supervisory packet, the receiving side will acknowledge it using the ACK field of the cellular supervisory packet. If the sender does not receive an acknowledgement within one second, it will repeat sending the cellular supervisory packet up to 12 times. After 12 attempts of sending the cellular supervisory packet without an acknowledgement, the sender will disconnect the line. Upon receiving an acknowledgement, the sender will restart its 3 second timer. Those skilled in the art will readily recognize that the timer values and wait times selected here may be varied without departing from the spirit or scope of the present invention.

# TABLE 13: Cellular Supervisory Packet Byte Structure

| 8F | ID | LI | ACK | data | data | | data |
|----|----|----|-----|------|------|--|------|

## Speech Compression

The Speech Compression algorithm described above for use in the voice mail function, the multimedia mail function and the show and tell function of the present system is all accomplished via the voice control circuit 306. Referring once again to Figure 3, the user is talking either through the handset, the headset or the microphone/speaker telephone interface. The analog voice signals are received and digitized by the telephone CODEC circuit 305. The digitized voice information is passed from the digital telephone CODEC circuit 305 to the voice control circuits 306. The digital signal processor (DSP) of the voice control circuit 306 is programmed to do the voice compression algorithm. The source code programmed into the voice control DSP is attached in the microfiche appendix. The DSP of the voice control circuit 306 compresses the speech and places the compressed digital representations of the speech into special packets described more fully below. As a result of the voice compression algorithm, the compressed voice information is passed to the dual port ram circuit 308 for either forwarding and storage on the disk of the personal computer via the RS232 serial interface or for multiplexing with conventional modem data to be transmitted over the telephone line via the telephone line interface circuit 309 in the voice-over-data mode of operation Show and Tell function 123).

## Speech Compression Algorithm

To multiplex high-fidelity speech with digital data and transmit both over the over the telephone line, a high available bandwidth would normally be required. In the present invention, the analog voice information is digitized into 8-bit PCM data at an 8 kHz sampling rate producing a serial bit stream of 64,000 bps serial data rate. This rate cannot be transmitted over the telephone line. With the Speech Compression algorithm described below, the 64 kbs digital voice data is compressed into a 9200 bps encoding bit stream using a fixed-point (non-floating point) DSP such that the compressed speech can be transmitted over the telephone line using a 9600 baud modem transmission. This is an approximately 7 to one compression ratio. This is accomplished in an efficient manner such that enough machine cycles remain during real time speech compression to allow real time acoustic and line echo cancellation in the same fixed-point DSP.

Even at 9200 bps serial data rate for voice data transmission, this bit rate leaves little room for concurrent conventional data transmission. A silence detection function is used to detect quiet intervals in the speech signal and substitute conventional data packets in lieu of voice data packets to effectively time multiplex the voice and data transmission. The allocation of time for conventional data transmission is constantly changing depending upon how much silence is on the voice channel.

The voice compression algorithm of the present system relies on a model of human speech which shows that human speech contains redundancy inherent in the voice patterns. Only the incremental innovations (changes) need to be transmitted. The algorithm operates on 160 digitized speech samples (20 milliseconds), divides the speech samples into time segments of 5 milliseconds each, and uses predictive coding on each segment. With this algorithm, the current segment is predicted as best as possible based on the past recreated segments and a difference signal is determined. The difference value is compared to the stored difference values in a lookup table or code book, and the address of the closest value is sent to the remote site along with the predicted gain and pitch values for each segment. In this fashion, four 5ms speech segments can be reduced to a packet of 23 bytes or 184 bits (46 bits per sample segment). By transmitting 184 bits every 20 milliseconds, an effective serial data transmission rate of 9200 bps is accomplished.

To produce this compression, the present system includes a unique Vector Quantization (VQ) speech compression algorithm designed to provide maximum fidelity with minimum compute power and bandwidth. The VQ algorithm has two major components. The first section reduces the dynamic range of the input speech signal by removing short term and long term redundancies. This reduction is done in the waveform domain, with the synthesized part used as the reference for determining the incremental "new" content. The second section maps the residual signal into a code book optimized for preserving the general spectral shape of the speech signal.

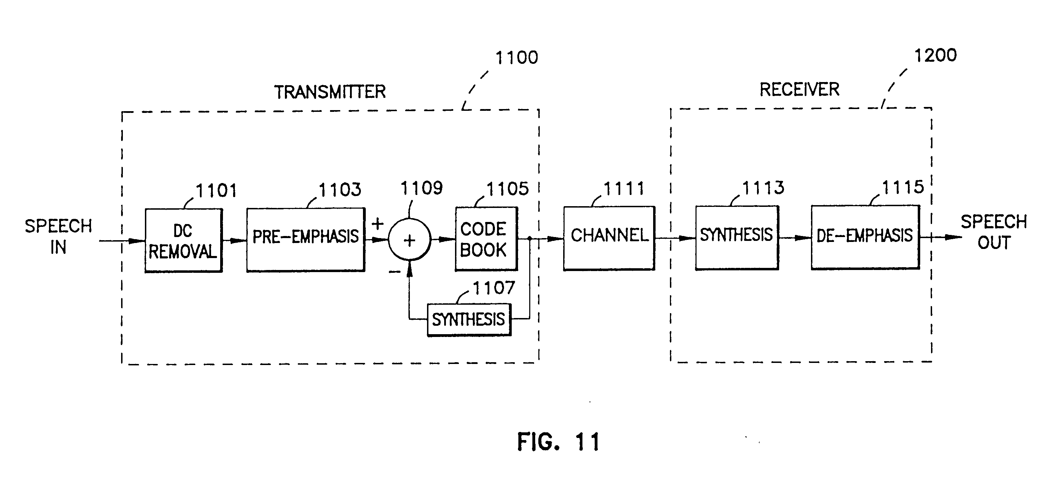

Figure 11 is a high level signal flow block diagram of the speech compression algorithm used in the present system to compress the digitized voice for transmission over the telephone line in the voice over data mode of operation or for storage and use on the personal computer. The transmitter and receiver components are implemented using the programmable voice control DSP/CODEC circuit 306 shown in Figure 3.

The DC removal stage 1101 receives the digitized speech signal and removes the D.C. bias by calculating the long-term average and subtracting it from each sample. This ensures that the digital samples of the speech are centered about a zero mean value. The pre-emphasis stage 1103 whitens the spectral content of the speech signal by balancing the extra energy in the low band with the reduced energy in the high band.

The system finds the innovation in the current speech segment by subtracting 1109 the prediction from reconstructed past samples synthesized from synthesis stage 1107. This process requires the synthesis of the past speech samples locally (analysis by synthesis). The synthesis block 1107 at the transmitter performs the same function as the synthesis block 1113 at the receiver. When the reconstructed previous segment of speech is subtracted from the present segment (before prediction), a difference term is produced in the form of an error signal. This residual error is used to find the best match in the code book 1105. The code book 1105 quantizes the error signal using a code book generated from a representative set of speakers and environments. A minimum mean squared error match is determined in 5ms segments. In addition, the code book is designed to provide a quantization error with spectral rolloff (higher quantization error for low frequencies and lower quantization error for higher frequencies). Thus, the quantization noise spectrum in the reconstructed signal will always tend to be smaller than the underlying speech signal.

The channel corresponds to the telephone line in which the compressed speech bits are multiplexed with data bits using a packet format described below. The voice bits are sent in 100ms packets of 5 frames each, each frame corresponding to 20ms of speech in 160 samples. Each frame of 20ms is further divided into 4 sub-blocks or segments of 5ms each. In each sub-block of the data consists of 7 bits for the long term predictor, 3 bits for the long term predictor gain, 4 bits for the sub-block gain, and 32 bits for each code book entry for a total 46 bits each 5ms. The 32 bits for code book entries consists of four 8-bit table entries in a 256 long code book of 1.25 ms duration. In the code book block, each 1.25ms of speech is looked up in a 256 word code book for the best match. The 8-bit table entry is transmitted rather than the actual samples. The code book entries are pre-computed from representative speech segments. (See the DSP Source Code in the microfiche appendix.)

On the receiving end 1200, the synthesis block 1113 at the receiver performs the same function as the synthesis block 1107 at the transmitter. The synthesis block 1113 reconstructs the original signal from the voice data packets by using the gain and pitch values and code book address corresponding to the error signal most closely matched in the code book. The code book at the receiver is similar to the code book 1105 in the transmitter. Thus the synthesis block recreates the original pre-emphasized signal. The de-emphasis stage 1115 inverts the pre-emphasis operation by restoring the balance of original speech signal.

The complete speech compression algorithm is summarized as follows:

a) Remove any D.C. bias in the speech signal.

b) Pre-emphasize the signal.

c) Find the innovation in the current speech segment by subtracting the prediction from reconstructed past samples. This step requires the synthesis of the past speech samples locally (analysis by synthesis) such that the residual error is fed back into the system.

d) Quantize the error signal using a code book generated from a representative set of speakers and environments. A minimum mean squared error match is determined in 5ms segments. In addition, the code book is designed to provide a quantization error with spectral rolloff (higher quantization error for low frequencies and lower quantization error for higher frequencies). Thus, the quantization noise spectrum in the reconstructed signal will always tend to be smaller than the underlying speech signal.

e) At the transmitter and the receiver reconstruct the speech from the quantized error signal fed into the inverse of the function in step c above. Use this signal for analysis by synthesis and for the output to the reconstruction stage below.

f) Use a de-emphasis filter to reconstruct the output.

The major advantages of this approach over other low-bit-rate algorithms are that there is no need for any complicated calculation of reflection coefficients (no matrix inverse or lattice filter computations). Also, the quantization noise in the output speech is hidden under the speech signal and there are no pitch tracking artifacts: the speech sounds "natural", with only minor increases of background hiss at lower bitrates. The computational load is reduced significantly compared to a VSELP algorithm and variations of the same algorithm provide bit rates of 8, 9.2 and 16 Kbit/s. The total delay through the analysis section is less than 20 milliseconds in the preferred embodiment. The present algorithm is accomplished completely in the waveform domain and there is no spectral information being computed and there is no filter computations needed.

Detailed Description of the Speech Compression Algorithm

The speech compression algorithm is described in greater detail with reference to Figures 11 through 13, and with reference to the block diagram of the hardware components of the present system shown at Figure 3. Also, reference is made to the detailed schematic diagrams in Figures 9A-9C. The voice compression algorithm operates within the programmed control of the voice control DSP circuit 306. In operation, the speech or analog voice signal is received through the telephone interface 301, 302 or 303 and is digitized by the digital telephone CODEC circuit 305. The CODEC for circuit 305 is a companding $\mu$-law CODEC. The analog voice signal from the telephone interface is band-limited to about 3,500 Hz and sampled at 8kHz by digital telephone CODEC 305. Each sample is encoded into 8-bit PCM data producing a serial 64kb/s signal. The digitized samples are passed to the voice control DSP/CODEC of circuit 306. There, the 8-bit $\mu$-law PCM data is converted to 13-bit linear PCM data. The 13-bit representation is necessary to accurately represent the linear version of the logarithmic 8-bit $\mu$-law PCM data. With linear PCM data, simpler mathematics may be performed on the PCM data.

The voice control DSP/CODEC of circuit 306 correspond to the single integrated circuit U8 shown in Figures 9A and 9B as a *WE®* DSP16C Digital Signal Processor/CODEC from AT&T Microelectronics which is a combined digital signal processor and a linear CODEC in a single chip as described above. The digital telephone CODEC of circuit 305 corresponds to integrated circuit U12 shown in Figure 9(b) as a T7540 companding $\mu$-law CODEC.

The sampled and digitized PCM voice signals from the telephone $\mu$-law CODEC U12 shown in Figure 9B are passed to the voice control DSP/CODEC U8 via direct data lines clocked and synchronized to an 8KHz clocking frequency. The digital samples are loaded into the voice control DSP/CODEC U8 one at a time through the serial input and stored into an internal queue held in RAM and converted to linear PCM data. As the samples are loaded into the end of the queue in the RAM of the voice control DSP U8, the samples at the head of the queue are operated upon by the voice compression algorithm. The voice compression algorithm then produces a greatly compressed representation of the speech signals in a digital packet form. The compressed speech signal packets are then passed to the dual port RAM circuit 308 shown in Figure 3 for use by the main controller circuit 313 for either transferring in the voice-over-data mode of operation or for transfer to the personal computer for storage as compressed voice for functions such as telephone answering machine message data, for use in the multi-media documents and the like.

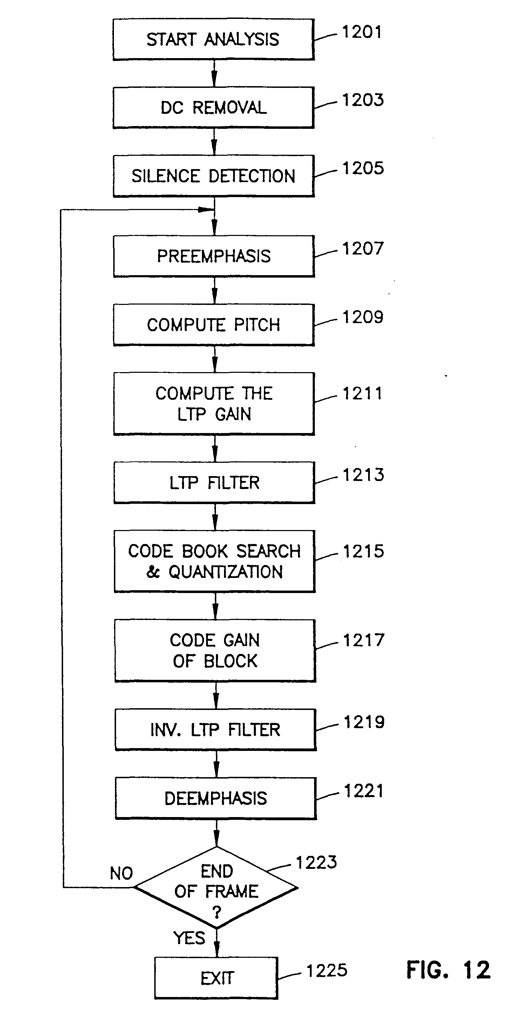

In the voice-over-data mode of operation, voice control DSP/CODEC circuit 306 of Figure 3 will be receiving digital voice PCM data from the digital telephone CODEC circuit 305, compressing it and transferring it to dual port RAM circuit 308 for multiplexing and transfer over the telephone line. This is the transmit mode of operation of the voice control DSP/CODEC circuit 306 corresponding to transmitter block 1100 of Figure 11 and corresponding to the compression algorithm of Figure 12.

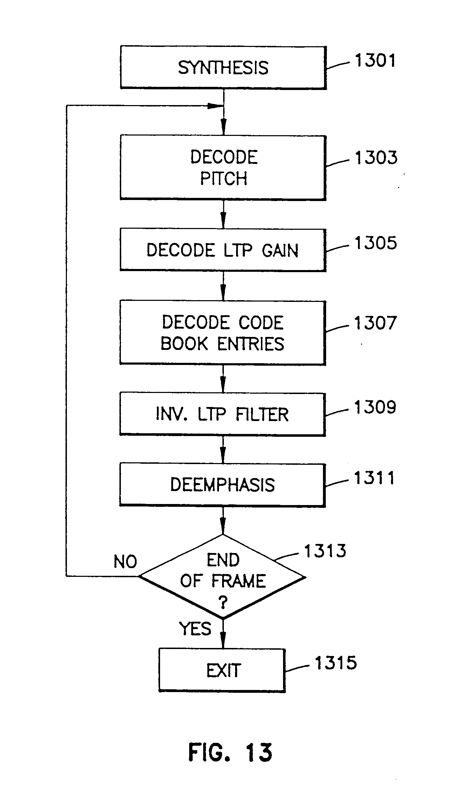

Concurrent with this transmit operation, the voice control DSP/CODEC circuit 306 is receiving compressed voice data packets from dual port RAM circuit 308, uncompressing the voice data and transferring the uncompressed and reconstructed digital PCM voice data to the digital telephone CODEC 305 for digital to analog conversion and eventual transfer to the user through the telephone interface 301, 302, 304. This is the receive mode of operation of the voice control DSP/CODEC circuit 306 corresponding to receiver block 1200 of Figure 11 and corresponding to the decompression algorithm of Figure 13. Thus the voice-control DSP/CODEC circuit 306 is processing the voice data in both directions in a full-duplex fashion.

The voice control DSP/CODEC circuit 306 operates at a clock frequency of approximately 24.576MHz while processing data at sampling rates of approximately 8KHz in both directions. The voice compression/decompression algorithms and packetization of the voice data is accomplished in a quick and efficient fashion to ensure that all processing is done in real-time without loss of voice information. This is accomplished in an efficient manner such that enough machine cycles remain in the voice control DSP circuit 306 during real time speech compression to allow real time acoustic and line echo cancellation in the same fixed-point DSP.

In programmed operation, the availability of an eight-bit sample of PCM voice data from the $\mu$-law digital telephone CODEC circuit 305 causes an interrupt in the voice control DSP/CODEC circuit 306 where the sample is loaded into internal registers for processing. Once loaded into an internal register it is transferred to a RAM address which holds a queue of samples. The queued PCM digital voice samples are converted from 8-bit $\mu$-law data to a 13-bit linear data format using table lookup for the conversion. Those skilled in the art will readily recognize that the digital telephone CODEC circuit 305 could also be a linear CODEC.

Referring to Figure 11, the digital samples are shown as speech entering the transmitter block 1100. The transmitter block, of course, is the mode of operation of the voice-control DSP/CODEC circuit 306 operating to receive local digitized voice information, compress it and packetize it for transfer to the main controller circuit 313 for transmission on the telephone line. The telephone line connected to telephone line interface 309 of Figure 3 corresponds to the channel 1111 of Figure 11.

A frame rate for the voice compression algorithm is 20 milliseconds of speech for each compression. This correlates to 160 samples to process per frame. When 160 samples are accumulated in the queue of the internal DSP RAM, the compression of that sample frame is begun.

The voice-control DSP/CODEC circuit 306 is programmed to first remove the DC component 1101 of the incoming speech. The DC removal is an adaptive function to establish a center base line on the voice signal by digitally adjusting the values of the PCM data. The formula for removal of the DC bias or drift is as follows:

$$S(n) = x(n) - x(n-1) + \alpha * S(n-1) \quad \text{where} \quad \alpha = \frac{32735}{32768}$$

The removal of the DC is for the 20 millisecond frame of voice which amounts to 160 samples. The selection of $\alpha$ is based on empirical observation to provide the best result.

Referring to Figure 12, the voice compression algorithm in a control flow diagram is shown which will assist in the understanding of the block diagram of Figure 11. The analysis and compression begin at block 1201 where the 13-bit linear PCM speech samples are accumulated until 160 samples representing 20 milliseconds of voice or one frame of voice is passed to the DC removal portion of code operating within the programmed voice control DSP/CODEC circuit 306. The DC removal portion of the code described above approximates the base line of the frame of voice by using an adaptive DC removal technique.

A silence detection algorithm 1205 is also included in the programmed code of the DSP/CODEC 306. The silence detection function is a summation of the square of each sample of the voice signal over the frame. If the power of the voice frame falls below a preselected threshold, this would indicate a silent frame. The detection of a silence frame of speech is important for later multiplexing of the V-data and C-data described below. During silent portions of the speech, the main controller circuit 313 will transfer conventional digital data (C-data) over the telephone line in lieu of voice data (V-data). The formula for computing the power is

$$PWR = \sum_{n=0}^{160-1} S(n) * S(n)$$

If the power PWR is lower than a preselected threshold, then the present voice frame is flagged as containing silence (See Table 15). The 160-sample silent frame is still processed by the voice compression algorithm; however, the silent frame packets are discarded by the main controller circuit 313 so that digital data may be transferred in lieu of voice data.

The rest of the voice compression is operated upon in segments where there are four segments per frame amounting to 40 samples of data per segment. It is only the DC removal and silence detection which is accomplished over an entire 20 millisecond frame. The pre-emphasis 1207 of the voice compression algorithm shown in Figure 12 is the next step. The formula for the pre-emphasis is

$$S(n) = S(n) - \tau * S(n-1) \text{ where } \tau = 0.55$$

20

Each segment thus amounts to five milliseconds of voice which is equal to 40 samples. Pre-emphasis then is done on each segment. The selection of $\tau$ is based on empirical observation to provide the best result.

The pre-emphasis essentially flattens the signal by reducing the dynamic range of the signal. By using pre-emphasis to flatten the dynamic range of the signal, less of a signal range is required for compression making the compression algorithm operate more efficiently.

The next step in the speech compression algorithm is the long-term predictor (LTP). The long-term prediction is a method to detect the innovation in the voice signal. Since the voice signal contains many redundant voice segments, we can detect these redundancies and only send information about the changes in the signal from one segment to the next. This is accomplished by comparing the linear PCM data of the current segment on a sample by sample basis to the reconstructed linear PCM data from the previous segments to obtain the innovation information and an indicator of the error in the prediction.

The first step in the long term prediction is to predict the pitch of the voice segment and the second step is to predict the gain of the pitch. For each segment of 40 samples, a long-term correlation lag PITCH and associated LTP gain factor $\beta_j$ (where j = 0, 1, 2, 3 corresponding to each of the four segments of the frame) are determined at 1209 and 1211, respectively. The computations are done as follows.

From MINIMUM PITCH (40) to MAXIMUM PITCH (120) for indices 40 through 120 (the pitch values for the range of previous speech viewed), the voice control DSP circuit 306 computes the cross correlation between the current speech segment and the previous speech segment by comparing the samples of the current speech segment against the reconstructed speech samples of the previous speech segment using the following formula:

$$Sxy(j) \ = \ \sum_{i=0}^{39} \ S(n_k + i) \ * \ S'(n_k + i - j)$$

**where**

**j = 40, ... 120**
**S = current sample of current segment**
**S' = past sample of reconstructed previous segment**
**$n_k$ = 0, 40, 80, 120 (the subframe index)**
and where the best fit is

**Sxy = MAX {Sxy(j)} where j = 40, ... 120.**

The value of j for which the peak occurs is the PITCH. This is a 7 bit value for the current segment calculated at 1209. The value of j is an indicator of the delay or lag at which the cross correlation matches the best between the past reconstructed segment and the current segment. This indicates the pitch of the voice in the current frame. The maximum computed value of j is used to reduce the redundancy of the new segment compared to the previous reconstructed segments in the present algorithm since the value of j is a measure of how close the current segment is to the previous reconstructed segments.

Next, the voice control DSP circuit 306 computes the LTP gain factor $\beta$ at 1211 using the following formula in which Sxy is the current segment and Sxx is the previous reconstructed segment:

$$\beta_{segment} \ = \ \frac{Sxy(j)}{Sxx(j)}$$

**where**

$$Sxx = \sum_{i=0}^{39} S'^2(i + MAX\_PITCH - best\_pitch)$$

The value of the LTP gain factor $\beta$ is a normalized quantity between zero and unity for this segment where $\beta$ is an indicator of the correlation between the segments. For example, a perfect sine wave would produce a $\beta$ which would be close to unity since the correlation between the current segments and the previous reconstructed segments should be almost a perfect match so the LTP gain factor is one.

The LTP gain factor is quantized from a LTP Gain Table. This table is characterized in Table 14.

## TABLE 14: LTP Gain Quantization

The gain value of $\beta$ is then selected from this table depending upon which zone or range $\beta_{segment}$ was found as depicted in Table 14. For example, if $\beta_{segment}$ is equal to 0.45, then $\beta$ is selected to be 2. This technique quantizes the $\beta$ into a 3-bit quantity.

Next, the LTP (Long Term Predictor) filter function 1213 is computed. The pitch value computed above is used to perform the long-term analysis filtering to create an error signal e(n). The normalized error signals will be transmitted to the other site as an indicator of the original signal on a per sample basis. The filter function for the current segment is as follows:

$$e(n) = S(n) - \beta * S'(n - pitch)$$

**where n = 0, 1, ... 39**

Next, the code book search and vector quantization function 1215 is performed. First, the voice control DSP circuit 306 computes the maximum sample value in the segment with the formula:

$$GAIN = MAX \{|e(n)|\}$$

**where n = 0, 1, ... 39**

This gain different than the LTP gain. This gain is the maximum amplitude in the segment. This gain is quantized using the GAIN table described in the DSP Source Code attached in the microfiche appendix. Next, the voice control DSP circuit 306 normalizes the LTP filtered speech by the quantized GAIN value by using the maximum error signal |e(n)| (absolute value for e(n)) for the current segment and dividing this into every sample in the segment to normalize the samples across the entire segment. Thus the e(n) values are all normalized to have values between zero and one using the following:

$$e(n) = e(n)/GAIN \quad n = 0 \ldots 39$$

Each segment of 40 samples is comprised of four subsegments of 10 samples each. The voice control DSP circuit 306 quantizes 10 samples of e(n) with an index into the code book. The code book consists of 256 entries (256 addresses) with each code book entry consisting of ten sample values. Every entry of 10 samples in the code book is compared to the 10 samples of each subsegment. Thus, for each subsegment, the code book address or index is chosen based on a best match between the 10-sample subsegment and the closest 10-sample code book entry. The index chosen has the least difference according to the following minimization formula:

$$\text{Min } \left\{ \sum_{i=0}^{10-1} (x_i - y_i)^2 \right\}$$

where

$x_i$ = the input vector of 10 samples, and

$y_i$ = the code book vector of 10 samples

This comparison to find the best match between the subsegment and the code book entries is computationally intensive. A brute force comparison may exceed the available machine cycles if real time processing is to be accomplished. Thus, some shorthand processing approaches are taken to reduce the computations required to find the best fit. The above formula can be computed in a shorthand fashion by precomputing and storing some of the values of this equation. For example, by expanding out the above formula, some of the unnecessary terms may be removed and some fixed terms may be precomputed:

$$(x_i - y_i)^2 = (x_i - y_i) * (x_i - y_i)$$
$$= (x_i^2 - x_i y_i - x_i y_i + y_i^2)$$
$$= (x_i^2 - 2x_i y_i + y_i^2)$$

where $x_i^2$ is a constant so it may be dropped from the formula, and where the value of $1/2 \, \Sigma \, y_i^2$ may be pre-computed and stored as the eleventh value in the code book so that the only real-time computation involved is the following formula:

$$\text{Min } \left\{ \sum_{i=0}^{10-1} (x_i y_i) \right\}$$

Thus, for a segment of 40 samples, we will transmit 4 code book indexes corresponding to 4 subsegments of 10 samples each. After the appropriate index into the code book is chosen, the LTP filtered speech samples are replaced with the code book samples. These samples are then multiplied by the quantized GAIN in block 1217.

Next, the inverse of the LTP filter function is computed at 1219:

$$e(n) = e(n) + \beta * S'(n - pitch) \, n = 0, ..., 39$$
$$S'(i) = S'(n) \, n = 40, ... 120; \, i = 0, ... (120-40)$$
$$S'(i) = e(i) \, i = 0, ... 40$$

The voice is reconstructed at the receiving end of the voice-over-data link according to the reverse of the compression algorithm as shown as the decompression algorithm in Figure 13. The synthesis of Figure 13 is also performed in the compression algorithm of Figure 12 since the past segment must be synthesized to predict the gain and pitch of the current segment.

Echo Cancellation Algorithm

The use of the speaker 304 and the microphone 303 necessitates the use of an acoustical echo cancellation algorithm to prevent feedback from destroying the voice signals. In addition, a line echo cancellation algorithm is needed no matter which telephone interface 301, 302 or 303/304 is used. The echo cancellation algorithm used is an adaptive echo canceler which operates in any of the modes of operation of the present system whenever the telephone interface is operational. In particular the echo canceler is operational in a straight telephone connection and it is operational in the voice-over-data mode of operation.

In the case of a straight telephone voice connection between the telephone interface 301, 302, 303/304 and the telephone line interface 309 in communication with an analog telephone on the other end, the digitized PCM voice data from digital telephone CODEC 305 is transferred through the voice control DSP/CODEC circuit 306 where it is processed in the digital domain and converted back from a digital form to an analog form by the internal linear CODEC of voice-control DSP/CODEC circuit 306. Since digital telephone CODEC circuit 305 is a $\mu$-law CODEC and the internal CODEC to the voice-control DSP/CODEC circuit 306 is a linear CODEC, a $\mu$-law-to-linear conversion must be accomplished by the voice control DSP/CODEC circuit 306.

In addition, the sampling rate of digital telephone CODEC 305 is slightly less than the sampling rate of the linear CODEC of voice control DSP/CODEC circuit 306 so a slight sampling conversion must also be accomplished. The sampling rate of digital telephone $\mu$-law CODEC 305 is 8000 samples per second and the sampling rate of the linear CODEC of voice control DSP/CODEC circuit 306 is 8192 samples per second.

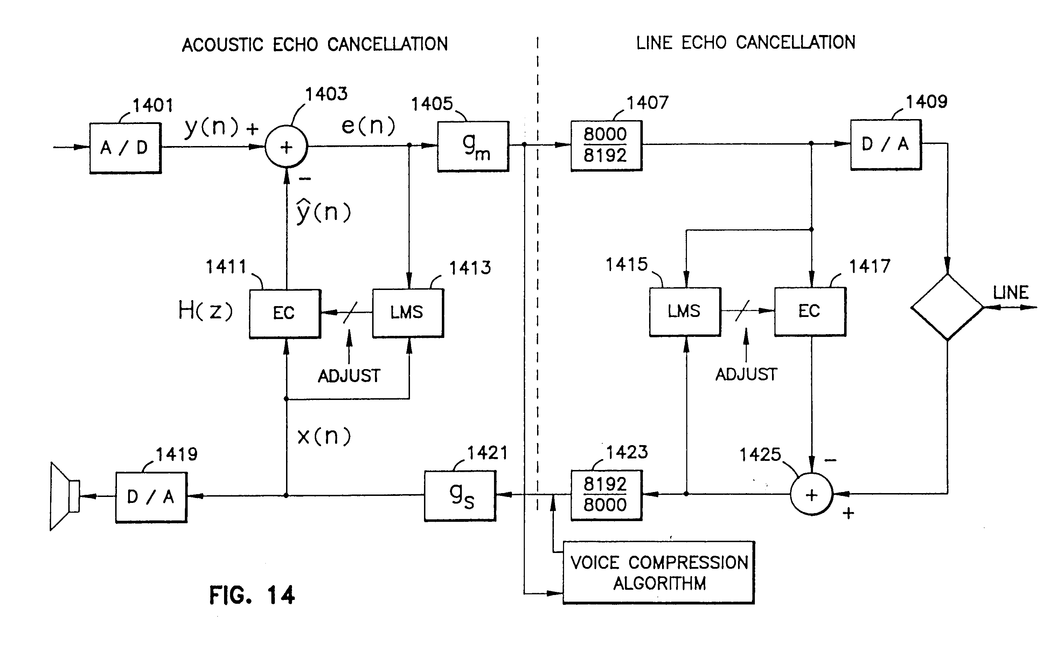

Referring to Figure 14 in conjunction with Figure 3, the speech or analog voice signal is received through the telephone interface 301, 302 or 303 and is digitized by the digital telephone CODEC circuit 305 in an analog to digital conversion 1401. The CODEC for circuit 305 is a companding $\mu$-law CODEC. The analog voice signal from the telephone interface is band-limited to about 3,500 Hz and sampled at 8kHz with each sample encoded into 8-bit PCM data producing a serial 64kb/s signal. The digitized samples are passed to the voice control DSP of circuit 306 where they are immediately converted to 13-bit linear PCM samples.

Referring again to Figure 14, the PCM digital voice data y(n) from telephone CODEC circuit 305 is passed to the voice control DSP/CODEC circuit 306 where the echo estimate signal $\hat{y}$(n) in the form of digital data is subtracted from it. The substraction is done on each sample on a per sample basis.

Blocks 1405 and 1421 are gain control blocks $g_m$ and $g_s$, respectfully. These digital gain controls are derived from tables for which the gain of the signal may be set to different levels depending upon the desired level for the voice signal. These gain levels can be set by the user through the level controls in the software as shown in Figure 49. The gain on the digitized signal is set by multiplying a constant to each of the linear PCM samples.

In an alternate embodiment, the gain control blocks $g_m$ and $g_s$ may be controlled by sensing the level of the speaker's voice and adjusting the gain accordingly. This automatic gain control facilitates the operation of the silence detection described above to assist in the time allocation between multiplexed data and voice in the voice over data mode of operation.

In voice over data mode, the output of gain control block $g_m$ is placed in a buffer for the voice compression/decompression algorithm 1425 instead of sample rate converter 1407. The samples in this mode are accumulated, as described above, and compressed for multiplexing and transmission by the main controller 313. Also in voice over data mode, the gain control block 1421 receives decompressed samples from the voice compression/decompression algorithm 1425 instead of sample rate converter 1423 for output.

The echo canceler of Figure 14 uses a least mean square (LMS) method of adaptive echo cancellation. The echo estimate signal subtracted from the incoming signal at 1403 is determined by function 1411. Function 1411 is a an FIR (finite impulse response) filter having in the preferred embodiment an impulse response which is approximately the length of delay though the acoustic path. The coefficients of the FIR filter are modeled and tailored after the acoustic echo path of the echo taking into account the specific physical attributes of the box that the speaker 304 and microphone 303 are located in and the proximity of the speaker 304 to the microphone 303. Thus, any signal placed on to the speaker is sent through the echo cancellation function 1411 to be subtracted from the signals received by the microphone 303 after an appropriate delay to match the delay in the acoustic path. The formula for echo replication of function box 1411 is:

$$\hat{y}(n) = \sum_{i=0}^{N-1} h_i x(n-i)$$

and the result of the subtraction of the echo cancellation signal $\hat{y}$(n) from the microphone signal y(n) is

$$e(n) = y(n) - \hat{y}(n).$$

The LMS coefficient function 1413 provides adaptive echo cancellation coefficients for the FIR filter of 1411. The signal is adjusted based on the following formula:

$$h_i(n+1) = h_i(n) + \frac{\beta * e(n)}{K + \sum_{j=0}^{N-1} x^2(n-j)} x(n-i)$$

where

i = 0, ... N-1
N = # of TAPS
n = Time Index
$\beta = 2^{-7}$
k = 1000

The echo cancellation of functions 1415 and 1417 are identical to the functions of 1413 and 1411, respectively. The functions 1407 and 1423 of Figure 14 are sample rate conversions as described above due to the different sampling rates of the digital telephone CODEC circuit 305 and the voice control CODEC of circuit 306.

Voice Over Data Packet Protocol

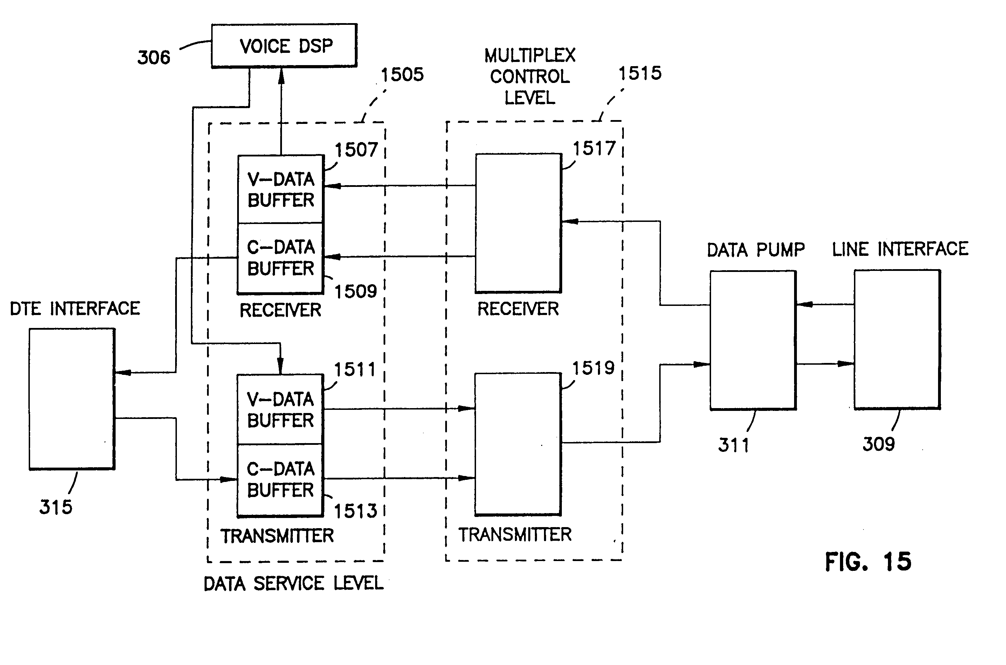

As described above, the present system can transmit voice data and conventional data concurrently by using time multiplex technology. The digitized voice data, called V-data carries the speech information. The conventional data is referred to as C-data. The V-data and C-data multiplex transmission is achieved in two modes at two levels: the transmit and receive modes and data service level and multiplex control level. This operation is shown diagrammatically in Figure 15.

In transmit mode, the main controller circuit 313 of Figure 3 operates in the data service level 1505 to collect and buffer data from both the personal computer 10 (through the RS232 port interface 315) and the voice control DSP (digital signal processor) 306. In multiplex control level 1515, the main controller circuit 313 multiplexes the data and transmits that data out over the phone line 1523. In the receive mode, the main controller circuit 313 operates in the multiplex control level 1515 to de-multiplex the V-data packets and the C-data packets and then operates in the data service level 1505 to deliver the appropriate data packets to the correct destination: the personal computer 10 for the C-data packets or the voice control DSP circuit 306 for V-data.

Transmit Mode

In transmit mode, there are two data buffers, the V-data buffer 1511 and the C-data buffer 1513, implemented in the main controller RAM 316 and maintained by main controller 313. When the voice control DSP circuit 306 engages voice operation, it will send a block of V-data every 20 ms to the main controller circuit 313 through dual port RAM circuit 308. Each V-data block has one sign byte as a header and 23 bytes of V-data, as described in Table 15 below.

## TABLE 15: Compressed Voice Packet Structure

| 7 | 6 | 5 | 4 | 3 | 2 | 1 | 0 | byte |
|---|---|---|---|---|---|---|---|------|
| 0 | 0 | 0 | 0 | 0 | 0 | 0 | 0 | sign |

| bits 7–1 | | | | | | | bit 0 | byte |
|---|---|---|---|---|---|---|---|------|
| $P_0$ | | | | | | | $\beta_0^0$ | 1 |
| $P_1$ | | | | | | | $\beta_0^1$ | 2 |
| $P_2$ | | | | | | | $\beta_0^2$ | 3 |
| $P_3$ | | | | | | | $\beta_1^0$ | 4 |
| $\beta_3$ | | $\beta_2$ | | | | $\beta_1^2$ | $\beta_1^1$ | 5 |
| $G_1$ | | | | $G_0$ | | | | 6 |
| $G_3$ | | | | $G_2$ | | | | 7 |
| $Vd_0$ | | | | | | | | 8 |
| $Vd_1$ | | | | | | | | 9 |
| $\vdots$ | | | | | | | | |
| $Vd_{15}$ | | | | | | | | 23 |

Where $P_n$ = pitch (7 bits) where n = subframe number
$\beta_n^m$ = Beta (3 bits)
$G_n$ = Gain (4 bits)
$Vd$ = Voice data (4 x 8 bits)
Effective Bit Rate = 184 bits / 20 msec = 9200 bps

The sign byte header is transferred every frame from the voice control DSP to the controller 313. The sign byte header contains the sign byte which identifies the contents of the voice packet. The sign byte is defined as follows:

00 hex = the following V-data contains silent sound
01 hex = the following V-data contains speech information

If the main controller 313 is in transmit mode for V-data/C-data multiplexing, the main controller circuit 313 operates at the data service level to perform the following tests. When the voice control DSP circuit 306 starts to send the 23-byte V-data packet through the dual port RAM to the main controller circuit 313, the main controller will check the V-data buffer to see if the buffer has room for 23 bytes. If there is sufficient room in the V-data buffer, the main controller will check the sign byte in the header preceding the V-data packet. If the sign byte is equal to one (indicating voice information in the packet), the main controller circuit 313 will put the following 23 bytes of V-data into the V-data buffer and clear the silence counter to zero. Then the main controller 313 sets a flag to request that the V-data be sent by the main controller at the multiplex control level.

If the sign byte is equal to zero (indicating silence in the V-data packet), the main controller circuit 313 will increase the silence counter by 1 and check if the silence counter has reached 5. When the silence counter reaches 5, the main controller circuit 313 will not put the following 23 bytes of V-data into the V-data buffer and will stop increasing the silence counter. By this method, the main controller circuit 313 operating at the service level will only provide non-silence V-data to the multiplex control level, while discarding silence V-data packets and preventing the V-data buffer from being overwritten.

The operation of the main controller circuit 313 in the multiplex control level is to multiplex the V-data and C-data packets and transmit them through the same channel. At this control level, both types of data packets are transmitted by the HDLC protocol in which data is transmitted in synchronous mode and checked by CRC error checking. If a V-data packet is received at the remote end with a bad CRC, it is discarded since 100% accuracy of the voice channel is not ensured. If the V-data packets were re-sent in the event of corruption, the real-time quality of the voice transmission would be lost. In addition, the C-data is transmitted following a modem data communication protocol such as CCITT V.42.

In order to identify the V-data block to assist the main controller circuit 313 to multiplex the packets for transmission at his level, and to assist the remote site in recognizing and de-multiplexing the data packets, a V-data block is defined which includes a maximum of five V-data packets. The V-data block size and the maximum number of blocks are defined as follows:

The V-data block header = 80h;

The V-data block size = 23;

The maximum V-data block size = 5;

The V-data block has higher priority to be transmitted than C-data to ensure the integrity of the real-time voice transmission. Therefore, the main controller circuit 313 will check the V-data buffer first to determine whether it will transmit V-data or C-data blocks. If V-data buffer has V-data of more than 69 bytes, a transmit block counter is set to 5 and the main controller circuit 313 starts to transmit V-data from the V-data buffer through the data pump circuit 311 onto the telephone line. Since the transmit block counter indicates 5 blocks of V-data will be transmitted in a continuous stream, the transmission will stop either at finish the 115 bytes of V-data or if the V-data buffer is empty. If V-data buffer has V-data with number more than 23 bytes, the transmit block counter is set 1 and starts transmit V-data. This means that the main controller circuit will only transmit one block of V-data. If the V-data buffer has V-data with less than 23 bytes, the main controller circuit services the transmission of C-data.

During the transmission of a C-data block, the V-data buffer condition is checked before transmitting the first C-data byte. If the V-data buffer contains more than one V-data packet, the current transmission of the C-data block will be terminated in order to handle the V-data.

Receive Mode

On the receiving end of the telephone line, the main controller circuit 313 operates at the multiplex control level to de-multiplex received data to V-data and C-data. The type of block can be identified by checking the first byte of the incoming data blocks. Before receiving a block of V-data, the main controller circuit 313 will initialize a receive V-data byte counter, a backup pointer and a temporary V-data buffer pointer. The value of the receiver V-data byte counter is 23, the value of the receive block counter is 0 and the backup pointer is set to the same value as the V-data receive buffer pointer. If the received byte is not equal to 80 hex (80h indicating a V-data packet), the receive operation will follow the current modem protocol since the data block must contain C-data. If the received byte is equal to 80h, the main controller circuit 313 operating in receive mode will process the V-data. For a V-data block received, when a byte of V-data is received, the byte of V-data is put into the V-data receive buffer, the temporary buffer pointer is increased by 1 and the receive V-data counter is decreased by 1. If the V-data counter is down to zero, the value of the temporary V-data buffer pointer is copied into the backup pointer buffer. The value of the total V-data counter is added with 23 and the receive V-data counter is reset to 23. The value of the receive block counter is increased by 1. A flag to request service of V-data is then set. If the receive block counter has reached 5, the main controller circuit 313 will not put the incoming V-data into the V-data receive buffer but throw it away. If the total V-data counter has reached its maximum value, the receiver will not put the incoming V-data into the V-data receive buffer but throw it away.

At the end of the block which is indicated by receipt of the CRC check bytes, the main controller circuit 313 operating in the multiplex control level will not check the result of the CRC but instead will check the value of the receive V-data counter. If the value is zero, the check is finished, otherwise the value of the backup pointer is copied back into the current V-data buffer pointer. By this method, the receiver is insured to de-multiplex the V-data from the receiving channel 23 bytes at a time. The main controller circuit 313 operating at the service level in the receive mode will monitor the flag of request service of V-data. If the flag is set, the main controller circuit 313 will get the V-data from the V-data buffer and transmit it to the voice control DSP circuit 306 at a rate of 23 bytes at a time. After sending a block of V-data, it decreases 23 from the value in the total V-data counter.

User Interface Description

The hardware components of the present system are designed to be controlled by an external computing device such as a personal computer. As described above, the hardware components of the present system may be controlled through the use of special packets transferred over the serial line interface between the hardware components and the personal computer. Those skilled in the art will readily recognize that the hardware components of the present systems may be practiced independent of the software components of the present systems and that the preferred software description described below is not to be taken in a limiting sense.

The combination of the software components and hardware components described in the present patent application may conveniently be referred to as a Personal Communication System (PCS). The present system provides for the following functions:

1. The control and hands-off operation of a telephone with a built-in speaker and microphone.

2. Allowing the user to create outgoing voice mail messages with a voice editor, and logging incoming voice mail messages with a time and date stamp.

3. Creating queues for outgoing faxes including providing the ability for a user to send faxes from unaware applications through a print command; also allowing the user the user to receive faxes and logging incoming faxes with a time and date stamp.

4. Allowing a user to create multi-media messages with the message composer. The message can contain text, graphics, picture, and sound segments. A queue is created for the outgoing multi-media messages, and any incoming multi-media messages are logged with a time and date stamp.

5. Providing a way for a user to have a simultaneous data and voice connection over a single communication line.

6. Providing terminal emulation by invoking an external terminal emulation program.

7. Providing address book data bases for all outbound calls and queues for the telephone, voice mail, fax manager, multi-media mail and show-and-tell functions. A user may also search through the data base using a dynamic pruning algorithm keyed on order insensitive matches.

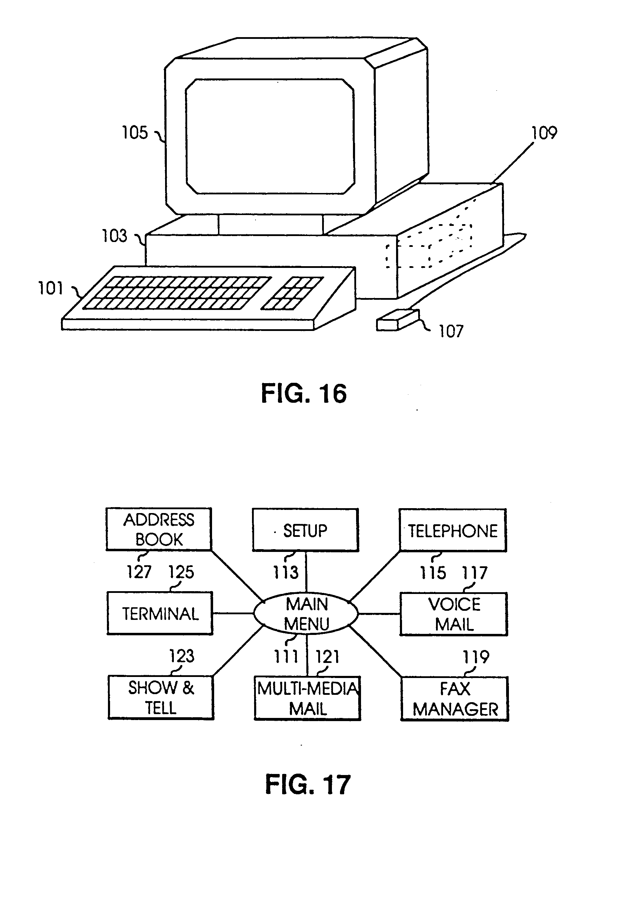

Figure 16 shows the components of a computer system that may be used with the PCS. The computer includes a keyboard 101 by which a user may input data into a system, a computer chassis 103 which holds electrical components and peripherals, a screen display 105 by which information is displayed to the user, and a pointing device 107, typically a mouse, with the system components logically connected to each other via internal system bus within the computer. The PCS software runs on a central processing unit 109 within the computer.

Figure 17 reveals the high-level structure of the PCS software. A main menu function 111 is used to select the following subfunctions: setup 113, telephone 115, voice mail 117, fax manager 119, multi-media mail 121, show & tell 123, terminal 125, and address book 127.

The preferred embodiment of the present system currently runs under Microsoft Windows® software running on an IBM® personal computer or compatible. However, it will be recognized that other implementations of the present inventions are possible on other computer systems and windowing software without loss of scope or generality.

Noncompressed Voice and Data Communication

Digital data transmission by modem is generally governed by the CCITT (The International Telegraph and Telephone Consultive Committee) standards from the International Telecommunications Union of Switzerland. Various CCITT standards have been adopted and implemented by a variety of manufacturers for allowing standard data telecommunication over telephone lines between sites. Even between equipment manufactured by other companies.

In the preferred embodiment of the present invention, various CCITT standards are used to implement the transmission of digitized voice data in an uncompressed format. In the preferred embodiment of the present invention the V.32bis, V.32, V.42, V.42bis, V.turbo and other standards are described, those skilled in the art will readily recognize that the present invention can be implemented in a variety of ways not necessarily conforming to the CCITT standards. To assist the reader in understanding the preferred embodiment of the present invention, however, the reader is referred to the CCITT blue book Volume VIII, entitled: "Data Communication over the Telephone Network", 1989, which is hereby incorporated by reference.

As described above, the voice over data implementation in the PCS modem invention can operate by digitizing the voice, compressing and encoding the digitized voice into digital packets and transmitting the digital packets in a multiplex fashion with data packets for transmission over the telephone line. In the preferred embodiment of the present invention, an alternative method and apparatus is presented in which the digitized voice no longer requires compression and encoding using code books. Rather the digitized voice is directly encoded onto the V.32 or V.42 standards using quadrature amplitude modulation (QAM). This method of digitized voice transmission over data allows for a wider bandwidth of transmission of the voice band, a more efficient processing of the digital data and a more efficient use of the DSP processing resources within the modem.

By way of background, the V.32 standard will be used to illustrate the preferred embodiment of the present invention. To assist in understanding the preferred embodiment of the present invention several definitions are required. The bits per second (bps) is the data rate at which the data is transmitted over the telephone line. The baud rate, in contrast to the bps, is the modulation rate which the voice grade telephone line can accommodate. For the V.32 standard, 2400 baud is the baud rate whereby 2400 signal changes per second occur. This frequency or number of signal changes is supported by standard voice grade telephone lines which have a voice band of 300 to 3000 hertz. Thus the 2400 baud rate is that which is transmitted by the DAA (Data Access Arrangement) of Figure 3, identified as the telephone line 309.

Referring to Figure 3, the voice control DSP 306 described above is operational in compressing the digital audio signals from digital telephone CODEC 305, encodes the digitized voice using a code book, packetizing them and storing them for transmission in dual port RAM 308. In the preferred embodiment of the present invention, voice control DSP circuit 306 no longer compresses and packetizes the voice data. Rather, voice control DSP of circuit 306 simply passes the digitized data through dual port RAM 308 for main controller 313 to be passed to data pump 311 for encoding onto the V.32 or V.42 standard transmission protocol by DSP data pump circuit 311.

Direct Encoding Algorithms

As described above, the digitized voice data is digitized by the digital telephone CODEC 305 by sampling a band limited voice signal at 8 kilohertz and encoding each sample into an 8 bit PCM data stream passed to the voice control DSP circuit 306 as a 64 kilobit per second signal.

This data stream is then passed through voice control DSP 306 to dual port RAM 308 onto controller circuit 313. The digitized voice data is then passed to the DSP data pump circuit 311 along with data from the personal computer received through RS232 serial interface circuit 315 by main controller 313. Both types of data are passed to the DSP data pump circuit 311 and an indication is made to circuit 311 from main controller 313 as to the type of data being passed.

The digital samples of the voice data is then encoded by the DSP data pump and CODEC of circuit 311 directly onto the quadrature amplitude modulated (QAM) carrier signal according to the CCITT V.32 standards. The carrier is modulated at a modulation rate of 2400 baud with each baud having the ability to represent 2,4 or more bits for each baud.

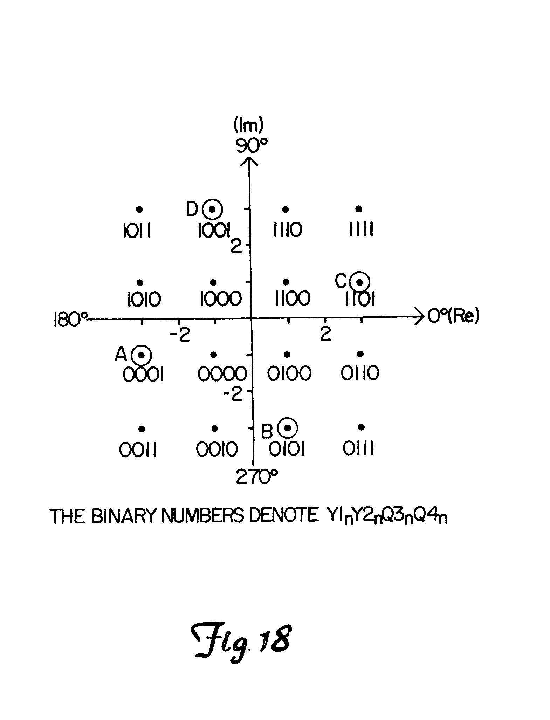

Figure 18 is a representation of the 4 point and 16 point non-redundant coding for a 9600 bit per second encoding of a 2400 baud carrier in the CCITT V.32 standard of differential quadrant coding for 4800 bit per second and for non-redundant coding at 9600 bits per second. By using QAM modulation, each baud represents a different phase transition which allows encoding of more possible phase changes and hence more bits per baud. If only four phase changes are used then two bits per baud are represented by each baud. If 16 phase changes are allowed per baud, then the carrier can represent four bits per baud. For example, by using 12 phase changes, four of them having two possible amplitudes, 16 variations in each baud will encode four bits. As shown in Figure 18, both the magnitude and the direction of the vector in the Re/Im (real/imaginary) plane imply which quad-bit group is being represented.

As shown in Figure 18, the x axis of the x/y coordinate map is the imaginary axis while the x axis is the real axis for the phase and amplitude plots. In order to efficiently transmit the voice grade signal, the eight-bit digitized data samples are first band limited to sample between 500 and 2900 hertz by the digital telephone CODEC 305. The sampling rate is set to be 4800 hertz to sample a 2400 hertz slice of the voice band. The voice band selected is 500 to 2900 hertz which is an adequate bandwidth for voice quality signals. A 500-2900 hertz sample is digitally shifted by the voice control DSP of circuit 306 such that a 2400 hertz band remains to be transmitted at a 4800 hertz clocking (sampling) rate. Thus 4800 bits per second is one of the preferred transmission rates. 4800 bits per second corresponds to two bits of information to be transmitted per baud. This signal is mapped onto the Re/Im complex plane of Figure 8, using the mapping shown in the large circles indicated as A, B, C, and D. When using the quadrature amplitude modulation technique defined by the V.32 CCITT encoding standard, there is remaining bandwidth for data to be simultaneously or time-division-multiplex transmitted on the same carrier. Thus instead of sending two data bits every baud (two at 4800), a reduced stream of data can be sent if data is sent only every fifth baud. The data rate would then drop to 4800/5 = 960 bits per second.

This drop in the number of bits per second transmitted can be recovered by increasing the number of possible vectors in the real/imaginary complex plane from four to 128. Thus instead of two bits of data every fifth baud we can send seven bits of data every fifth baud. The data rate would then be 7 x 2400/5 = 16,800/5 = 3360 bits per second.

If trellis coding is used in this scheme, there is a one bit redundant coding thus making the effective data rate to be 6 x 2400/5 = 14,400/5 = 2880 bits per second. During the other four baud intervals that are not used, the present invention sends speech samples encoding as a Re/Im complex vector.

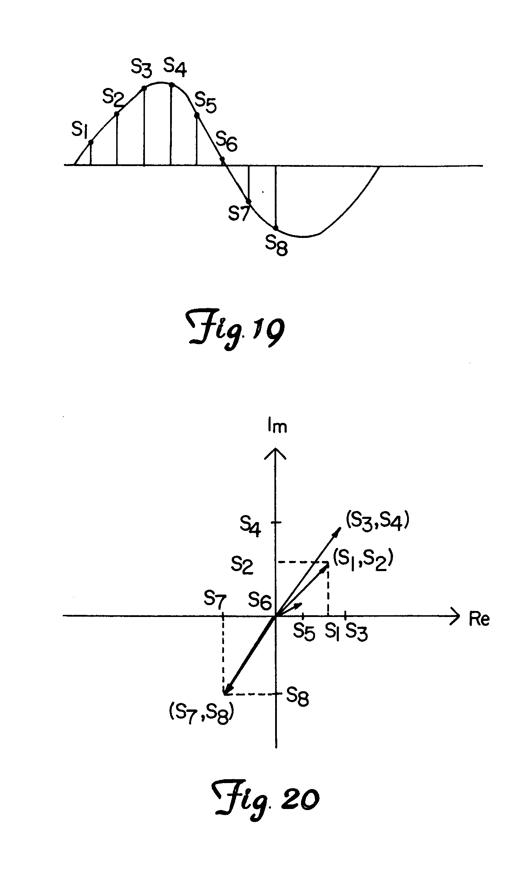

Figure 19 represents a time domain sampling plot of a speech signal sampled at twice the highest frequency of the voice band allowed. The $S_n$ samples indicated in Figure 19 as $S_1$, $S_2$, $S_3$, ... represent the sampling points along the analog speech signal. Two samples could simultaneously be sent in one baud if the sample ($S_1$, $S_2$) is transmitted as a complex vector in a real/imaginary plane having 128 possible vector locations. Since this accuracy of the reproduction of the speech signal is not critical, the fact that 128 possible QAM vectors must be distinguished at the receiving end is not a problem since errors introduced into the signal do not need to be accounted for. A complex vector which is misinterpreted on the receiving end may result in a bit of garbled conversation and, even if noticeable on the receiving end, can be ignored. Thus no error correction is required and a highly populated complex plane can be used to transmit a voice grade non-compressed digitized audio signal.

Figure 20 represents the complex plane in which two samples $S_1$, $S_2$, are simultaneously transmitted during a single baud. In baud one (the first cycle in the transmitted carrier signal), the vector ($S_1$, $S_2$) indicates both the $S_1$ and $S_2$ samples by mapping the $S_1$ sample onto the real axis and the $S_2$ onto the imaginary axis. In a similar fashion other pairs of sampled digitized values such as vector ($S_3$, $S_4$) or vector ($S_5$, $S_6$), etc. are similarly represented.

In the preferred embodiment of the present invention, the first four baud (the first four cycles in the transmitted carrier signal) represent sample pairs ($S_1$, $S_2$), ($S_3$,$S_4$), ($S_5$, $S_6$), and ($S_7$, $S_8$). The fifth baud is reserved for data transmission which can be intermixed with the digitized voice samples. Following baud five is baud six, seven, eight, and nine in which additional voice samples ($S_9$, $S_{10}$), ($S_{11}$,$S_{12}$), ($S_{13}$, $S_{14}$), and ($S_{15}$, $S_{16}$) are transmitted respectively.

Thus with the transmission algorithm of the preferred embodiment of the present invention, every five baud can transmit eight speech samples so in one second we can transmit 2400/5 x 8 = 3840 speech samples using a 128 element complex plane of QAM modulation using a 2400 baud carrier.

The data rate of the preferred embodiment of the present invention could be reduced by sending data only every 10 bauds reserving the rest of the bandwidth for speech samples. If the data rate is halved to 1440 (with trellis coding and V.32bis or a $2^7$ = 128 point constellation), the speech sample rate can go up to 2400/10 x 18 = 4320 samples per second. Thus the preferred embodiment of the present invention can easily send analog voice from 600 to 2760 hertz with almost no degradation or compression. The baud rate can also be increased such as using the V.34 CCITT or ITU-T (International Telecommunications Union - Telecommunication Standardization)standard to 3000 or even 3250 hertz where the bandwidth for data and voice can correspondingly increase.

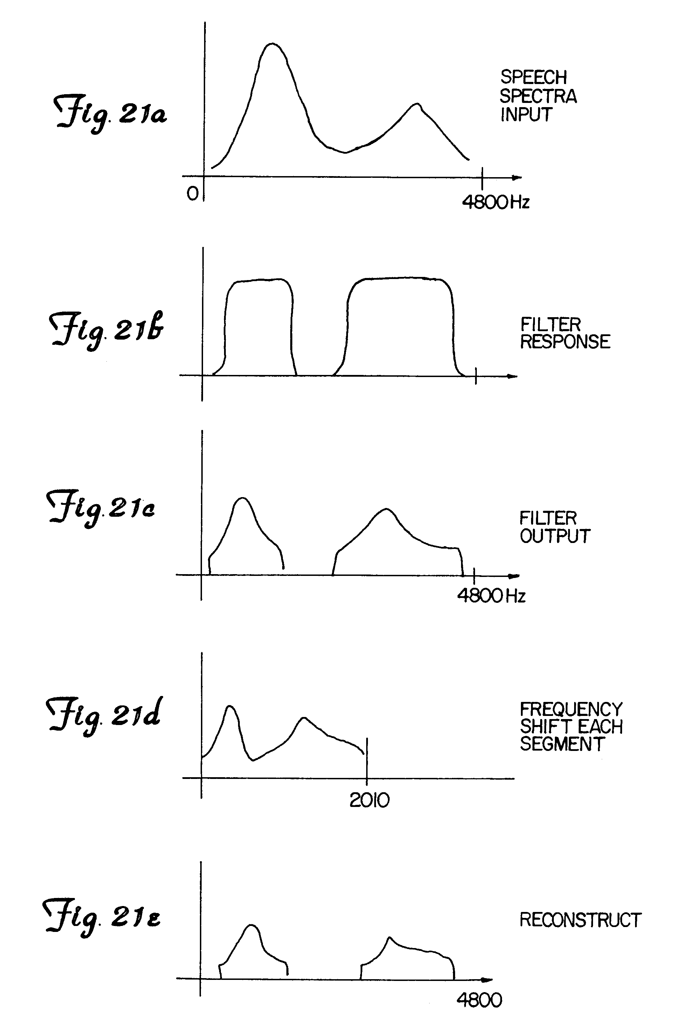

As a further increase in quality and clarity of the speech signal, the speech signal can become companded in the frequency domain prior to transmission, as shown in Figure 21. Figure 21a is an example of a speech spectra from 0 to 4800 hertz. Figure 21b shows the companding system response with Figure 21c representing the corresponding output of the companding. By using a frequency shift, for each segment of the speech and performing the inverse operation as shown in Figure 21e, a higher quality speech signal can be transmitted and reconstructed. Depending on the selection of the baud rate, this frequency companding is not necessary.

It is possible to switch very easily back and forth between voice and data and data only modes on the carrier. The selection or ratio of data and digitized speech samples sent over the same carrier is first determined and transmitted during the CCITT V.32 handshaking interval between the modems. The decision on which samples are sent at which time periods and at which bauds can also be changed dynamically during the transmission by using pre-arranged data packets transmitted by the HDLC protocol using a reserve packet designator in the header as described above in conjunction with the compressed voice data packet protocol and described in conjunction with table 15. Also in the initial training or handshake between the modems, echo cancellation may be defeated for the bauds which transmit voice packets and dynamically switched on and retrained only in the data transmission intervals.

In an alternative embodiment of the present invention, the amount of processing required to receive the digitized data from the digital telephone CODEC 311 from the main controller and passing it to the data pump chip set of circuit 311 may eliminate the need for voice controller DSP 306. The main controller contains enough processing speed to forward the voice data and thus the complexity of the overall circuit may be reduced by eliminating the voice control DSP 306.

The handshake interval or training interval used between modems to communicate their respective capabilities can also be used to transmit the allocation of the bauds between voice bauds and data bauds. Also, the modems may be dynamically retrained as to which bauds of the carrier signal contain digitized voice samples and which bauds contain data to accommodate changes in the digitized voice rate and the data rate to be transmitted by exchanging appropriate low-level control or supervisory packets.

## Conclusion

The present inventions are to be limited only in accordance with the scope of the appended claims, since others skilled in the art may devise other embodiments still within the limits of the claims.

## Claims

1. A method of voice-over-data communication in a multi-function communications system, comprising the steps of:
   (a) invoking a communication connection between a local site equipped with a local modem and a remote site equipped with a remote modem using a carrier signal;
   (b) alerting the local modem of a desire to transmit both data and voice signals over the carrier signal;
   (c) digitizing voice samples to create digitized voice samples;
   (d) encoding multiple bits of the digitized voice samples onto selected cycles of the carrier signal using quadrature amplitude modulation to produce first encoded cycles;
   (e) encoding multiple bits of the data onto other selected cycles of the carrier signal using quadrature amplitude modulation to produce second encoded cycles;
   (f) transmitting the first and second encoded cycles to the remote site; and
   (g) decoding the digitized voice samples and the data from the first and second encoded cycles.

2. A method as claimed in claim 1, in which the steps of encoding both using quadrature amplitude modulation further include the step of encoding using a four-vector constellation in the real/imaginary plane.

3. A method as claimed in claim 1 or claim 2, in which the steps of encoding both using quadrature amplitude modulation include the step of encoding using a 16-vector constellation in the real/imaginary plane.

4. A method as claimed in any one of claims 1 to 3, in which the steps of encoding both using quadrature amplitude modulation include the step of trellis coding of the vector constellation in the real/imaginary plane.

5. A method as claimed in any one of claims 1 to 4, in which the step of digitizing the voice samples to create digitized voice samples includes companding the voice signal before creating the digitized the voice samples.

6. A method as claimed in any one of claims 1 to 5, in which the step of digitizing the voice samples to create digitized voice samples includes shifting the voice band in the frequency domain before creating the digitized the voice samples.

7. A method as claimed in any one of claims 1 to 6, in which the step of invoking a communication connection includes the step of training the local modem and the remote modem as to which bauds of the carrier signal contain digitized voice samples and which bauds contain data.

**8.** A method as claimed in claim 7, in which the step of invoking a communication connection includes dynamically retraining the local modem and the remote modem as to which bauds of the carrier signal contain digitized voice samples and which bauds contain data to accommodate changes in the digitized voice rate and the data rate to be transmitted.

**9.** A system for full-duplex transmission of voice and data information, comprising:

(a) interface means for connection to a communications medium and for transmitting a carrier signal on the communications medium;

(b) voice input means for receiving voice signals from a local user;

(c) data input means for receiving computer data from a local computer;

(d) conversion means connected to the input means for converting the voice signals into digital voice data; and

(e) control means connected for

encoding multiple bits of the digital voice data onto first cycles of the carrier using quadrature amplitude modulation,

encoding multiple bits of the computer data onto second cycles of the carrier using quadrature amplitude modulation, and

sending supervisory packets on the carrier to indicate which cycles of the carrier contain multiple bits of the digital voice data.

**10.** A system as claimed in claim 9, which includes means for encoding the carrier using quadrature amplitude modulation, using a four-vector constellation in the real/imaginary plane.

FIG. 1

113

PCS

Selections    Setup                Help

115

Telephone

117

Voice Mail

119

Fax Manager

121

Multi-Media Mail

123

Show and Tell

125

Terminal

127

Address Book

## Figure 2

FIG. 3

MICROPHONE SPEAKER

304

HEADSET

302

MICROPHONE

303

HANDSET

301

305

DIGITAL TELEPHONE CODEC

SERIAL I/O

CONTROL LINES

306

CODEC

VOICE CONTROL DSP

307

DSP'S RAM

308

DUAL PORT RAM

309

TELEPHONE LINE INTERFACE

310

MUX

311

CODEC

DSP DATA PUMP

SIO / CTC

312

313

MAIN CONTROLLER

316

RAM

317

PEPROM

314

SIO

315

RS232 SERIAL INTERFACE

**FIG. 4**

FIG. 5A

HD64180Z–12MHz
U17

A0 A0
A1 A1
A2 A2
A3 A3
A4 A4
A5 A5
A6 A6
A7 A7
A8 A8
A9 A9
A10 A10
A11 A11
A12 A12
A13 A13
A14 A14
A15 A15
A16 A16
A17 A18
A18 A19
A19 —5V
D0 A0
D1 A1
D2 A2
D3 A3
D4 A4
D5 A5
D6 A6
D7 A7
WR
RD
M1
IOE
INTO
CLK
XTAL
WAIT
HALT
EXTAL
RTS0
CTS0
DCD0
TXA0
NMI
BUSAK
ME

(A) (B)

R27 C5 20pF R28 5V XTAL C4 20pF
OV OV

84C90–12MHz
U15

A0 D0
A1 D1
A2 D2
A3 D3
D4
D5
D6
D7
RD
M1
IORG
INT
CLOCK
STBA
RDYA
RDYB
SYNCA
STBB
TO3
TO2
TO1
TO0
TXDA
TXCA
RXDA
RTSA
DTRA
RXCA
TXDB
CS
CTSA
DCDA
CTSB

OV OV
RTS
OV
S1 12DIP

GATEARRAY–2
U19

DB0 D0
DB1 D1
DB2 D2
DB3 D3
DB4 D4
DB5 D5
DB6 D6
DB7 D7
MREQ MREQ
RD RD
WR WR
A2
A3
A4
A5
A6
A7
AN1
AN2
IORQ
IN1
IN2
DZ0 TO2
DZ1 TO1
DZ2
DZ3 TXDA
DZ4 TXCA
DZ5 RXDA
DZ6 RTSA
DZ7 DTRA
SP1 RXCA
SP2 TXDB
SP3 KIO
SP4 ZIOWR
RNGL Z80WR
RNGTN Z80RD
GPO

A2
A3
A4
A5
A6
A7
A18
A19
IORQ
SPEED1
EC
TEST
FAX
QUENCH
OH–
SPEED5
SPEED2
SPEED4
SPEED3
RNGL

FIG. 5B

EP 0 669 749 A1

Ⓑ                                              Ⓐ

PSRAM—100NS

| D0 | D0 | A0 | A0 |
| D1 | D1 | A1 | A1 |
| D2 | D2 U14 | A2 | A2 |
| D3 | D3 | A3 | A3 |
| D4 | D4 | A4 | A4 |
| D5 | D5 | A5 | A5 |
| D6 | D6 | A6 | A6 |
| D7 | D7 | A7 | A7 |
| RD— | $\overline{OE}$ | A8 | A8 |
| WR— | $\overline{WR}$ | A9 | A9 |
| 0V | GND | A10 | A10 |
| 5V | VCC | A11 | A11 |
| | $\overline{RFSH}$ | A12 | A12 |
| | | A13 | A13 |
| 5V | CE2 | A14 | A14 |
| MEM2— | $\overline{CE1}$ | A15 | A15 |
| | | A16 | A16 |

290010—100NS                              29C256

| D0 | D0 | A0 | A0 | A0 | A0 | D0 | D0 |
| D1 | D1 U16 | A1 | A1 | A1 | A1 U13 | D1 | D1 |
| D2 | D2 | A2 | A2 | A2 | A2 | D2 | D2 |
| D3 | D3 | A3 | A3 | A3 | A3 | D3 | D3 |
| D4 | D4 | A4 | A4 | A4 | A4 | D4 | D4 |
| D5 | D5 | A5 | A5 | A5 | A5 | D5 | D5 |
| D6 | D6 | A6 | A6 | A6 | A6 | D6 | D6 |
| D7 | D7 | A7 | A7 | A7 | A7 | D7 | D7 |
| RD— | $\overline{OE}$ | A8 | A8 | A8 | A8 | RD— | $\overline{OE}$ |
| WR— | $\overline{WR}$ | A9 | A9 | A9 | A9 | WR— | $\overline{WR}$ |
| 0V | GND | A10 | A10 | A10 | A10 | 0V | GND |
| 5V | VCC | A11 | A11 | A11 | A11 | 5V | VCC |
| | | A12 | A12 | A12 | A12 | | |
| | | A13 | A13 | A13 | A13 | | |
| | | A14 | A14 | A14 | A14 | MEM4— | |
| MEM1— | $\overline{CE}$ | A15 | A15 | | $\overline{CE}$ | | |
| | | A16 | A16 | | | | |

**FIG. 5C**

39

FIG. 6A

FIG. 6B

EP 0 669 749 A1

FIG. 6C

42

**FIG. 7A**

43

FIG. 7B

EP 0 669 749 A1

# FIG. 7C

CND─ ──R70─ 2N3906 ──Q6

4.7K

LH1500AT    CND

R38

0V ─▷─ ─R38─

U31   1K

T1 ──────────────

CR31       CR27
1N4004     1N4004

S4

CR29       CR28
1N4004     1N4004

R4
SIDACTOR
350V

R2
22K

CR1
1N5242

CR2
1N5242

CR30
1N4004

U32

CNY17

12V

U30

T2 ──────────

CND R39
1K   ─▷─ 0V

LH1500AT

C1
.47uF/250V

AGND ─ C72  2.2uF

R78 100K

CR42
1N5231

U25
TL082

R19  10K
5V
R18  10K
0V

CR32 1N5228
0V ─▷─ RNGL

R17 10K

J1RING

R35 330

R79
9.09

LINE
6PIN
MODJACK

FB3
FERRRITE

FB4
FERRITE

J2

EP 0 669 749 A1

FIG. 8A

FIG. 8B

EP 0 669 749 A1

47

FIG. 9A

# FIG. 9B

U11 DUAL−PORT−RAM

U8
DSP16c/PQFP

U12 T7540

FIG. 9C

FIG. 10A

# FIG. 10B

FIG. 10C

SPEECH IN

1101 DC REMOVAL

1103 PRE-EMPHASIS

1109 (+)

1105 CODE BOOK

1107 SYNTHESIS

1100 TRANSMITTER

1111 CHANNEL

1113 SYNTHESIS

1115 DE-EMPHASIS

1200 RECEIVER

SPEECH OUT

FIG. 11

54

START ANALYSIS — 1201

DC REMOVAL — 1203

SILENCE DETECTION — 1205

PREEMPHASIS — 1207

COMPUTE PITCH — 1209

COMPUTE THE LTP GAIN — 1211

LTP FILTER — 1213

CODE BOOK SEARCH & QUANTIZATION — 1215

CODE GAIN OF BLOCK — 1217

INV. LTP FILTER — 1219

DEEMPHASIS — 1221

END OF FRAME ? — 1223

NO

YES

EXIT — 1225

FIG. 12

SYNTHESIS ——1301

DECODE
PITCH ——1303

DECODE LTP GAIN ——1305

DECODE CODE
BOOK ENTRIES ——1307

INV. LTP FILTER ——1309

DEEMPHASIS ——1311

NO — END OF FRAME ? ——1313

YES

EXIT ——1315

FIG. 13

ACOUSTIC ECHO CANCELLATION    LINE ECHO CANCELLATION

FIG. 14

EP 0 669 749 A1

FIG. 15

EP 0 669 749 A1

**FIG. 16**

**FIG. 17**

THE BINARY NUMBERS DENOTE $Y1_nY2_nQ3_nQ4_n$

Fig. 18

EP 0 669 749 A1

*Fig. 19*

*Fig. 20*

*Fig. 21a*

SPEECH
SPECTRA
INPUT

0            4800 Hz

*Fig. 21b*

FILTER
RESPONSE

*Fig. 21c*

FILTER
OUTPUT

4800 Hz

*Fig. 21d*

FREQUENCY
SHIFT EACH
SEGMENT

2010

*Fig. 21e*

RECONSTRUCT

4800

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 12, no. 273 (E-639) 29 July 1988 & JP-A-63 054 052 (MATSUSHITA) * abstract * | 1 | H04M11/06 H04L27/34 |
| Y | | 2-10 | |
| Y | GB-A-2 210 237 (RACAL) * page 8, line 1 - page 11, line 4 * * page 12, line 10 - line 22 * | 2,3,7-10 | |
| Y | US-A-5 214 656 (CHUNG ET AL.) * abstract * | 4 | |
| Y | IECON '87, November 1987, CAMBRIDGE US pages 1143 - 1148 J. D . MILLS ET AL. 'A DATA AND VOICE SYSTEM FOR THE GENERAL SERVICE TELEPHONE NETWORK' * the whole document * | 5,6 | |
| A | | 1,9 | |

TECHNICAL FIELDS
SEARCHED    (Int.Cl.6)

H04M
H04L

The present search report has been drawn up for all claims

| Place of search | Date of completion of the search | Examiner |
|---|---|---|
| THE HAGUE | 8 June 1995 | Mikkelsen, C |

EPO FORM 1503 03.82 (P04C01)